# EUROPEAN PATENT SPECIFICATION

(11) **EP 4 373 061 B1**
(45) Date of publication and mention of the grant of the patent: **29.10.2025**
(21) Application number: 23809942.8
(22) Date of filing: 26.09.2023
(51) Int. Cl.: H04M 1/02, G06F 1/16, H04M 1/18

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 28.09.2022 KR 20220123616; 10.11.2022 KR 20220149752
(43) Date of publication of application: 22.05.2024
(73) Proprietor: Samsung Electronics Co., Ltd., Suwon-si, Gyeonggi-do 16677 (KR)
(72) Inventor: CHOI, Seungbum, Suwon-si, Gyeonggi-do 16677 (KR); SONG, Kwonho, Suwon-si, Gyeonggi-do 16677 (KR); KIM, Yongyoun, Suwon-si, Gyeonggi-do 16677 (KR); HEO, Joon, Suwon-si, Gyeonggi-do 16677 (KR)
(74) Representative: Gulde & Partner
(86) International application number: PCT/KR2023/014776
(87) International publication number: WO 2024/071967

(56) References cited:
- CN-A- 111 739 424
- CN-A- 113 597 592
- KR-A- 20190 087 694
- KR-A- 20200 128 172
- KR-A- 20220 078 197
- KR-A- 20220 078 197
- US-A1- 2020 350 378

## Description

### [Technical Field]

Embodiments of the disclosure relate to an electronic device including a flexible display.

### [Background Art]

An electronic device has gradually become slimmer, and has been improved so as to increase rigidity, reinforce the design aspect, and differentiate functional elements thereof at the same time. The electronic device has been deviated from the uniform rectangular shape, and has been gradually changed to various shapes. The electronic device may have a transformable structure which is convenient to carry and which can use a large-screen display. For example, as part of the transformable structure, the electronic device may include foldable housings which operate to fold or unfold each other. Such an electronic device may require a support structure which can reduce the deformation of the flexible display due to frequent folding operations. Conventional electronic devices including a flexible display and a bending part are disclosed in KR 2022 0078197 A and CN 113 597 592 A.

### [Disclosure of Invention]

### [Technical Problem]

A foldable electronic device may include a hinge device (e.g., a hinge structure or hinge module), and a first housing and a second housing which are connected to each other in a foldable manner through the hinge device. Such a foldable electronic device may operate in an in-folding and/or out-folding manner that the first housing is rotated within a range of 0 to 360 degrees against the second housing through the hinge device. The foldable electronic device may include a flexible display disposed to be supported at least partly through the first housing and the second housing in an unfolded state of the foldable electronic device. Such a flexible display may include a plurality of layers (e.g., a protection layer, a POL, a polymer layer, or at least one functional layer) disposed on an upper surface and/or a lower surface based on a display panel.

In the foldable electronic device, a protection cover (e.g., deco cover or protection frame) disposed so that an edge part (e.g., an edge) of a display of the flexible display is invisible from outside may be omitted. For example, in the electronic device from which the protection cover is omitted, the flexible display may be disposed so that edges thereof are visible from the outside while being supported by the first housing and the second housing. In this case, since the edge part including a bending part (e.g., chip on panel or chip on plastic (COP) or folded chip on film (COF)) extending from the display panel of the flexible display is vulnerable to an external impact, a malfunction may occur due to the damage thereof. In order to solve such a problem, the flexible display may have a buffering and waterproof/dustproof structure through applying and curing a molding liquid at an edge part of the extended bending part together with the bending part.

In the flexible display, an interlayer slip may occur in accordance with a folding operation, and in case that a hard molding liquid is applied, the interlayer slip phenomenon of the flexible display may be disturbed to cause a buckling phenomenon to occur, and thus the surface quality may deteriorate. Further, in case that a soft molding liquid is applied, this case may flexibly cope with the interlayer slip phenomenon, but may be vulnerable to an external impact to deteriorate the durability. Further, since static electricity having entered into a space between the housings and the flexible display panel is induced along the bending part (electrostatic discharge (ESD)), it may electrically damage the display panel.

According to various embodiments of the disclosure, it is possible to provide an electronic device including a flexible display, which can help improving the durability against an external impact through providing a protection structure for a bending part of the display panel.

Various embodiments provide an electronic device including a flexible display having a protection structure for surface quality improvement in consideration of a slip amount of the flexible display during durability improvement against an external impact and folding.

However, problems to be solved by the disclosure are not limited to the above-mentioned problems, but can be variously expanded in a range that does not deviate from the idea and scope of the disclosure.

### [Solution to Problem]

The invention is defined by the independent claims. The dependent claims define further advantageous embodiments. The description that follows is subjected to this limitation. Any disclosure lying outside the scope of said claims is only intended for illustrative as well as comparative purposes. According to the invention, an electronic device includes: a hinge module; a first housing connected to the hinge module; a second housing connected to the hinge module so as to be foldable against the first housing; and a flexible display disposed to be supported by the first housing and the second housing. The flexible display includes: a window layer; a display panel located under the window layer, and including a plane part and a bending part configured to extend from the plane part and be bent from an edge area of the flexible display adjacent to a side wall of the second housing toward a rear surface of the flexible display; a buffer part disposed between the display panel and the second housing to cover at least a part of the edge area together with the bending part; and at least one protection member at least partly embedded in the buffer part and disposed between the bending part and the second housing. The bending part comprises at least a control circuit or a plurality of electronic elements.

According to various embodiments, an electronic device includes: a hinge module; a first housing connected to the hinge module; a second housing connected to the hinge module so as to be foldable against the first housing; and a flexible display disposed to be supported by the first housing and the second housing. The flexible display includes: a window layer; a display panel located under the window layer: a buffer part disposed between the display panel and the second housing to cover at least a part of the edge area of the display panel; and at least one protection member embedded in the buffer part and disposed between the display panel and the second housing.

### [Advantageous Effects of invention]

The electronic device according to exemplary embodiments of the disclosure can help the durability improvement of the flexible display that may be vulnerable to external impact by applying a soft buffer part (e.g., filling member), which can protect the bending part and still allow the interlayer slip, at the first edge including the bending part of the flexible display, and applying the protection member to the buffer part.

In addition, various effects being grasped directly or indirectly through this document can be provided.

The effects that can be obtained in the disclosure are not limited to the above-mentioned effects, and other unmentioned effects will be able to be clearly understood by those of ordinary skill in the art to which the disclosure pertains from the following description.

### [Brief Description of Drawings]

In relation to the description of the drawings, the same or similar reference numerals may be used for the same or similar constituent elements.
FIG. 1A is a front perspective view of an electronic device illustrating an unfolded state (or flat state) according to various embodiments of the disclosure.
FIG. 1B is a plan view illustrating a front surface of an electronic device in an unfolded state according to various embodiments of the disclosure.
FIG. 1C is a plan view illustrating a rear surface of an electronic device in an unfolded state according to various embodiments of the disclosure.
FIG. 2A is a perspective view of an electronic device illustrating a folded state according to various embodiments of the disclosure.
FIG. 2B is a perspective view of an electronic device illustrating an intermediate state according to various embodiments of the disclosure.
FIG. 3 is an exploded perspective view of an electronic device according to various embodiments of the disclosure.
FIG. 4A is an exploded perspective view of a flexible display according to various embodiments of the disclosure.
FIG. 4B is a configuration diagram of a flexible display when viewed from a rear surface thereof according to various embodiments of the disclosure.
FIG. 5A is a partial cross-sectional view of an electronic device when viewed along line 5a-5a of FIG. 1A according to various embodiments of the disclosure.
FIG. 5B is a perspective view of a protection member according to various embodiments of the disclosure.
FIG. 6 is a process chart for applying a buffer part and a protection member to a flexible display according to various embodiments of the disclosure.
FIGS. 7A to 7E are schematic diagrams illustrating a process for applying a buffer part and a protection member to a flexible display according to various embodiments of the disclosure.
FIGS. 8A to 8C are views illustrating various embodiments of a protection member according to various embodiments of the disclosure.
FIGS. 9A to 9J are partial cross-sectional views of an electronic device according to various embodiments of the disclosure.
FIG. 10A is a partial cross-sectional view of an electronic device including a protection member according to various embodiments of the disclosure.
FIG. 10B is a partial view of an electronic device illustrating a state where a protection member according to various embodiments of the disclosure is used as a dummy pattern of an antenna.
FIG. 11 is a partial cross-sectional view of an electronic device when viewed along line 11-11 of FIG. 1A according to various embodiments of the disclosure.
FIGS. 12A to 12C are cross-sectional views of an electronic device illustrating a support structure of a bending part using heterogeneous buffer parts according to various embodiments of the disclosure.
FIG. 12D is a cross-sectional view of an electronic device illustrating a support structure of a bending part through a second buffer part according to various embodiments of the disclosure.
FIG. 13A is a view illustrating a support structure of a flexible display through a protection cap according to various embodiments of the disclosure.
FIG. 13B is a partial cross-sectional view of an electronic device when viewed along line 13b-13b of FIG. 13A according to various embodiments of the disclosure.
FIG. 14A is a constitutional view of a rollable electronic device according to various embodiments of the disclosure.
FIG. 14B is a cross-sectional view of a rollable electronic device when viewed along line 14b-14b of FIG. 14 according to various embodiments of the disclosure.

### [Mode for the Invention]

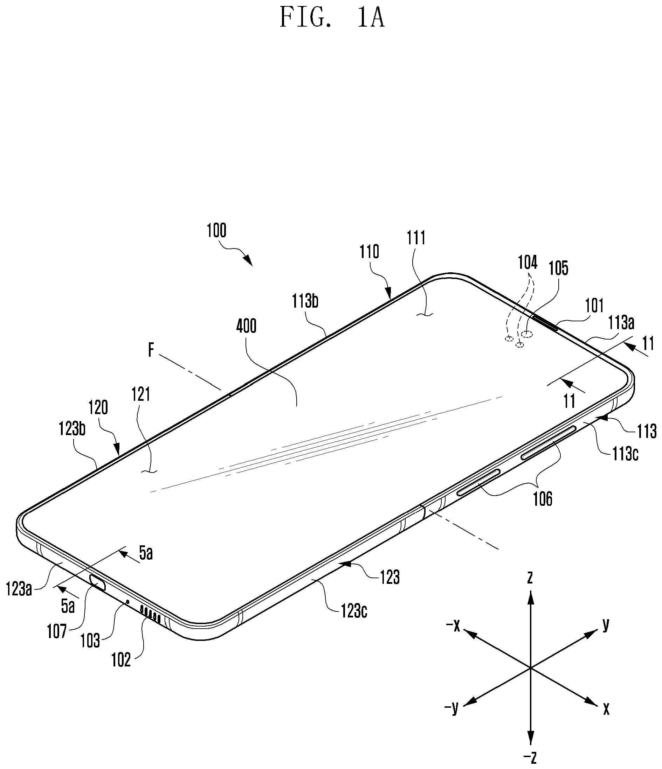

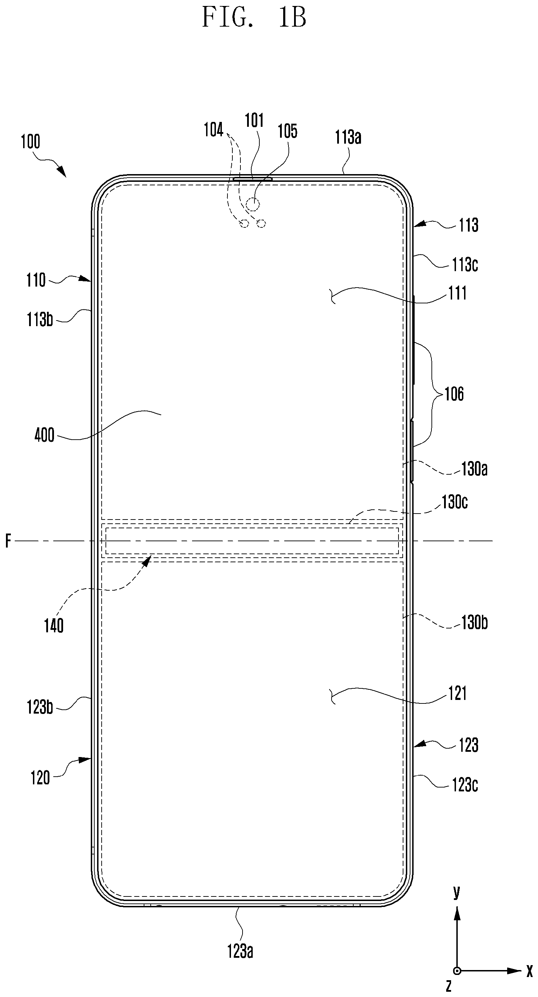

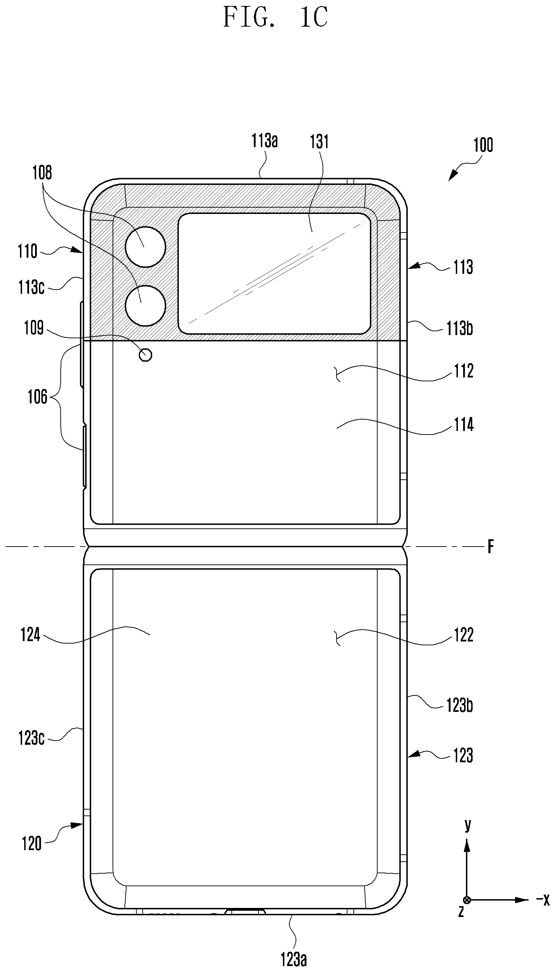

FIG. 1A is a perspective view of an electronic device illustrating an unfolded state (or flat state) of the electronic device according to various embodiments of the disclosure. FIG. 1B is a plan view illustrating a front surface of an electronic device in an unfolded state of the electronic device according to various embodiments of the disclosure. FIG. 1C is a plan view illustrating a rear surface of an electronic device in an unfolded state according to various embodiments of the disclosure.

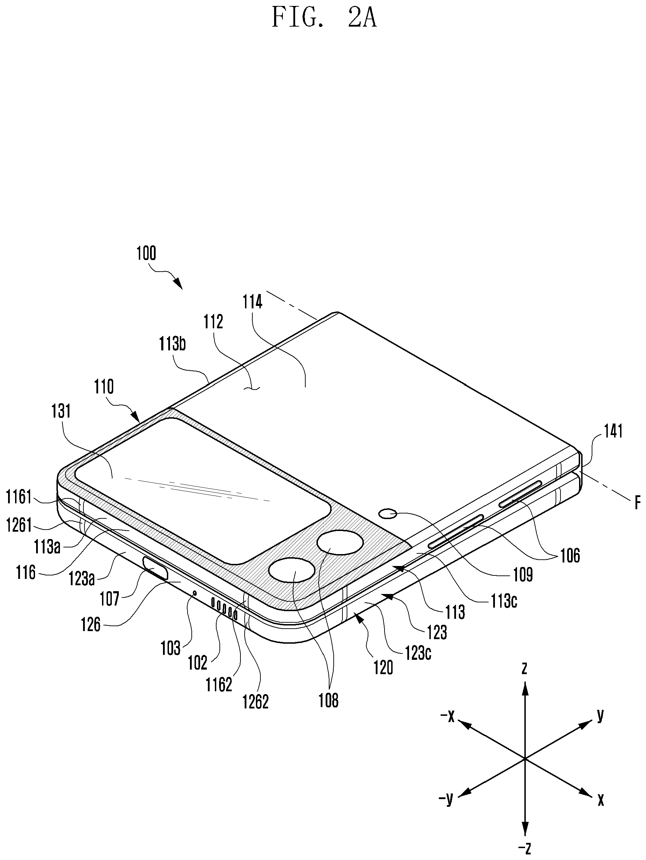

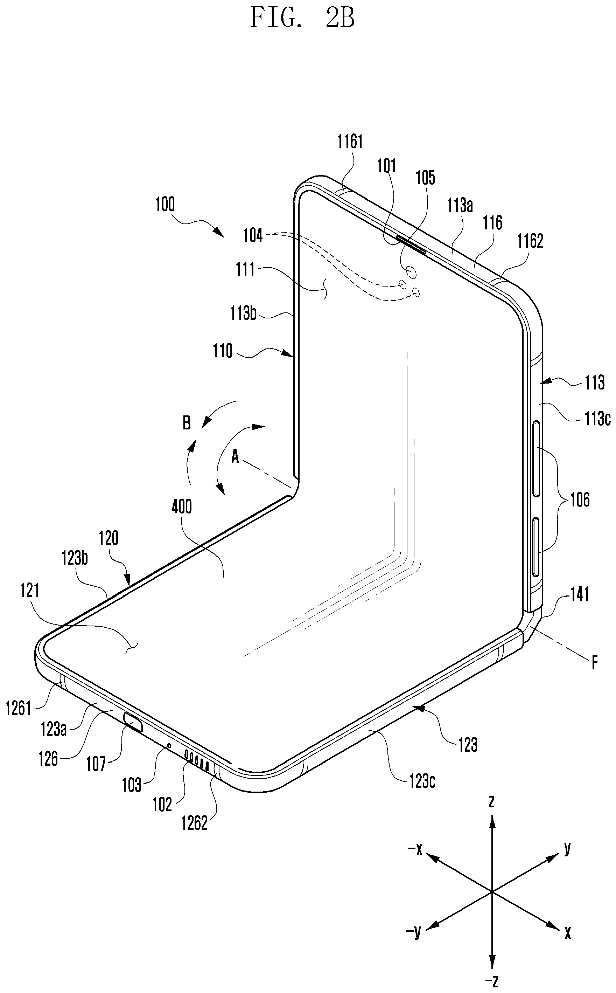

FIG. 2A is a perspective view of an electronic device illustrating a folded state of the electronic device according to various embodiments of the disclosure. FIG. 2B is a perspective view of an electronic device illustrating an intermediate state of the electronic device according to various embodiments of the disclosure.

With reference to FIGS. 1A to 2B, an electronic device 100 may include first and second housings 110 and 120 (e.g., foldable housing structure) combined with each other in a foldable manner based on a hinge device (e.g., hinge device 140 of FIG. 1B). In an embodiment, the hinge device (e.g., hinge device 140 of FIG. 1B) may be disposed in an X-axis direction or in a Y-axis direction. According to an embodiment, the electronic device 100 may include a first display 400 (e.g., flexible display, foldable display, or main display) disposed in an area (e.g., recess) formed by the first and second housings 110 and 120. According to an embodiment, the first housing 110 and the second housing 120 may be disposed on both sides around a folding axis F, and may have a substantially symmetrical shape about the folding axis F. According to an embodiment, an angle or a distance between the first housing 110 and the second housing 120 may differ depending on the state of the electronic device 100. For example, depending on whether the electronic device is in an unfolded state (or flat state), in a folded state, or in an intermediate state, the angle or the distance between the first housing 110 and the second housing 120 may differ.

According to an embodiment, in the unfolded state of the electronic device 100, the first housing 110 may include a first surface 111 directed in a first direction (e.g., front direction) (z-axis direction), and a second surface 112 directed in a second direction (e.g., rear direction) (-z-axis direction) opposite to the first surface 111. According to an embodiment, in the unfolded state of the electronic device 100, the second housing 120 may include a third surface 121 directed in the first direction (z-axis direction), and a fourth surface 122 directed in the second direction (-z-axis direction). According to an embodiment, in the unfolded state of the electronic device 100, the first surface 111 of the first housing 110 and the third surface 121 of the second housing 120 may be directed in substantially the same first direction (z-axis direction). In an embodiment, in the folded state of the electronic device 100, the first surface 111 of the first housing 110 and the third surface 121 of the second housing 120 may face each other. According to an embodiment, in the unfolded state of the electronic device 100, the second surface 112 of the first housing 110 and the fourth surface 122 of the second housing 120 may be directed in substantially the same second direction (-z-axis direction). In an embodiment, in the folded state of the electronic device 100, the second surface 112 of the first housing and the fourth surface 122 of the second housing 120 may be directed in opposite directions. For example, in the folded state of the electronic device 100, the second surface 112 may be directed in the first direction (z-axis direction), and the fourth surface 122 may be directed in the second direction (-z-axis direction). In this case, the first display 400 may not be viewed from outside (in-folding manner). In an embodiment, the electronic device 100 may be folded so that the second surface 112 of the first housing 110 and the fourth surface 122 of the second housing 120 face each other. In this case, the first display 400 may be disposed to be viewed from the outside (out-folding manner).

According to various embodiments, the first housing 110 (e.g., first housing structure) may include a first lateral member 113 forming the appearance of the electronic device 100, and a first rear cover 114 combined with the first lateral member 113, and forming at least a part of the second surface 112 of the electronic device 100. According to an embodiment, the first lateral member 113 may include a first side surface 113a, a second side surface 113b extending from one end of the first side surface 113a, and a third side surface 113c extending from the other end of the first side surface 113a. According to an embodiment, the first lateral member 113 may be formed in a quadrangular (e.g., square or rectangular) shape through the first side surface 113a, the second side surface 113b, and the third side surface 113c.

According to various embodiments, the second housing 120 (e.g., second housing structure) may include a second lateral member 123 forming the appearance of the electronic device 100 at least partly, and a second lateral cover 124 combined with the second lateral member 123, and forming at least a part of the fourth surface 122 of the electronic device 100. According to an embodiment, the second lateral member 123 may include a fourth side surface 123a, a fifth side surface 123b extending from one end of the fourth side surface 123a, and a sixth side surface 123c extending from the other end of the fourth side surface 123a. According to an embodiment, the second lateral member 123 may be formed in a quadrangular shape through the fourth side surface 123a, the fifth side surface 123b, and the sixth side surface 123c.

According to various embodiments, the first and second housings 110 and 120 are not limited to the illustrated shapes and combinations, but may be implemented by combinations and/or compositions of other shapes or components. In an embodiment, the first lateral member 113 may be integrally formed with the first rear cover 114, and the second lateral member 123 may be integrally formed with the second rear cover 124.

According to various embodiments, in the unfolded state of the electronic device 100, the second side surface 113b of the first lateral member 113 and the fifth side surface 123b of the second lateral member 123 may be connected to each other without a gap. According to an embodiment, in the unfolded state of the electronic device 100, the third side surface 113c of the first lateral member 113 and the sixth side surface 123c of the second lateral member 123 may be connected to each other without a gap. According to an embodiment, in the unfolded state of the electronic device 100, the sum of the lengths of the second side surface 113b and the fifth side surface 123b may be configured to be longer than the length of the first side surface 113a and/or the fourth side surface 123a. According to an embodiment, in the unfolded state of the electronic device 100, the sum of the lengths of the third side surface 113c and the sixth side surface 123c may be configured to be longer than the length of the first side surface 113a and/or the fourth side surface 123a.

With reference to FIGS. 2A and 2B, the first lateral member 113 and/or the second lateral member 123 may be formed of metal, or may further include polymer that is injected into metal. According to an embodiment, the first lateral member 113 and/or the second lateral member 123 may include at least one conductive part 116 and/or 126 electrically segmented through at least one segment part 1161, 1162 and/or 1261, 1262 formed of polymer. In this case, the at least one conductive part 116 and/or 126 may be electrically connected to a wireless communication circuit included in the electronic device 100, and thus may be used as at least a part of an antenna that operates in at least one designated band (e.g., legacy band).

According to various embodiments, the first rear cover 114 and/or the second rear cover 124 may be formed of, for example, at least one of coated or colored glass, ceramic, polymer, or metal (e.g., aluminum, stainless steel (STS), or magnesium) or a combination of at least two thereof.

According to various embodiments, the first display 400 may be disposed to extend from the first surface 111 of the first housing 110 to at least a part of the third surface 121 of the second housing 120 across the hinge device (e.g., hinge device 140 of FIG. 1B). In an embodiment, the first display 400 may include a first area 130a substantially corresponding to the first surface 111, a second area 130b corresponding to the second surface 121, and a third area 130c (e.g., flexible area or folding area) connecting the first area 130a and the second area 130b to each other. According to an embodiment, the third area 130c may be a part of the first area 120a and/or the second area 130b, and may be disposed at a location corresponding to the hinge device (e.g., hinge device 140 of FIG. 1B). According to an embodiment, the electronic device 100 may include a hinge housing 141 (e.g., hinge cover) supporting the hinge device (e.g., hinge device 140 of FIG. 1B). In an embodiment, the hinge housing 141 may be disposed to be exposed to outside when the electronic device 100 is in a folded state, and not to be viewed from the outside as being drawn into an inner space of the first housing 110 and an inner space of the second housing 120 when the electronic device 100 is in an unfolded state.

According to various embodiments, the electronic device 100 may include a second display 131 (e.g., sub-display) disposed separately from the first display 400. According to an embodiment, the second display 131 may be disposed to be exposed at least partly on the second surface 112 of the first housing 110. In an embodiment, when the electronic device 100 is in the folded state, the second display 131 may display at least a part of state information of the electronic device 100 in replacement of at least a part of a display function of the first display 400. According to an embodiment, the second display 131 may be disposed to be viewed from the outside through at least a partial area of the first rear cover 114. In an embodiment, the second display 131 may be disposed on the fourth surface 122 of the second housing 120. In this case, the second display 131 may be disposed to be viewed from the outside through at least a partial area of the second rear cover 124.

According to various embodiments, the electronic device 100 may include at least one of an input device 103 (e.g., microphone), sound output devices 101 and 102, a sensor module 104, camera devices 105 and 108, a key input device 106, or a connector port 107. In an illustrated embodiment, although the input device 103 (e.g., microphone), the sound output devices 101 and 102, the sensor module 104, the camera devices 105 and 108, the key input device 106, or the connector port 107 are illustrated as hole or circular shaped elements formed on the first housing 110 or the second housing 120, they are exemplarily illustrated for explanation, but are not limited thereto. According to various embodiments, the input device 103 may include at least one microphone 103 disposed on the second housing 120. In an embodiment, the input device 103 may include a plurality of microphones 103 disposed to sense the sound direction. In an embodiment, the plurality of microphone 103 may be disposed at proper locations on the first housing 110 and/or the second housing 120. According to an embodiment, the sound output devices 101 and 102 may include at least one speaker 101 and 102. According to an embodiment, the at least one speaker 101 and 102 may include a receiver 101 for call disposed on the first housing 110, and the speaker 102 disposed on the second housing 120. In an embodiment, the input device 103, the sound output devices 101 and 102, and the connector port 107 may be disposed in a space provided in the first housing 110 and/or the second housing 120 of the electronic device 100, and may be exposed to an external environment through at least one hole formed on the first housing 110 and/or the second housing 120. According to an embodiment, the at least one connector port 107 may be used to transmit and receive power and/or data to and from an external electronic device. In an embodiment, the at least one connector port (e.g., ear jack hole) may accommodate a connector (e.g., ear jack) for transmitting and receiving an audio signal to and from the external electronic device. In an embodiment, the hole formed on the first housing 110 and/or the second housing 120 may be commonly used for the input device 103 and the sound output devices 101 and 102. In an embodiment, the sound output devices 101 and 102 may include a speaker (e.g., piezo-electric speaker) that is not exposed through the hole formed on the first housing 110 and/or the second housing 120.

According to various embodiments, the sensor module 104 may generate an electrical signal or a data value corresponding to an internal operation state of the electronic device 100 or an external environment state. According to an embodiment, the sensor module 104 may detect the external environment through the first surface 111 of the first housing 110. In an embodiment, the electronic device 100 may further include at least one sensor module disposed to detect the external environment through the second surface 112 of the first housing 110. According to an embodiment, the sensor module 104 (e.g., illumination sensor) may be disposed to detect the external environment through the first display 400 under the first display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biosensor, a temperature sensor, a humidity sensor, an illumination sensor, a proximity sensor, a biosensor, an ultrasonic sensor, or an illumination sensor 104.

According to various embodiments, the camera devices 105 and 108 may include the first camera device 105 (e.g., front camera device) disposed on the first surface 111 of the first housing 110, and the second camera device 108 disposed on the second surface 112 of the first housing 110. In an embodiment, the electronic device 100 may further include a flash 109 disposed near the second camera device 108. According to an embodiment, the camera devices 105 and 108 may include at least one lens, an image sensor, and/or an image signal processor. According to an embodiment, the camera devices 105 and 108 may be disposed so that two or more lenses (e.g., wide angle lens, ultra wide angle lens, or telephoto lens) and two or more image sensors are located on one surface (e.g., first surface 111, second surface 112, third surface 121, or fourth surface 122) of the electronic device 100. In an embodiment, the camera devices 105 and 108 may include lenses for time of flight (TOF) and/or image sensors.

According to various embodiments, the key input device 106 (e.g., key buttons) may be disposed on the third side surface 113c of the first lateral member 113 of the first housing 110. In an embodiment, the key input device 106 may be disposed on at least one side surface of other side surfaces 113a and 113b of the first housing 110 and/or side surfaces 123a, 123b, and 123c of the second housing 120. In an embodiment, the electronic device 100 may not include some or all of the key input devices 106, and the non-included key input device 106 may be implemented in another form, such as a soft key, on the first display 400. In an embodiment, the key input device 106 may be implemented by using the pressure sensor included in the first display 400.

According to various embodiments, one of the camera devices 105 and 108 (e.g., first camera device 105) or the sensor module 104 may be disposed to be exposed through the first display 400. According to an embodiment, the first camera device 105 or the sensor module 104 may be optically exposed to the outside through an opening (e.g., through-hole) formed at least partly on the first display 400 in the inner space of the electronic device 100. According to an embodiment, at least a part of the sensor module 104 may be disposed not to be visually exposed through the first display 400 in the inner space of the electronic device 100. With reference to FIG. 2B, the electronic device 100 may operate to maintain at least one designated folding angle in an intermediate state through the hinge device (e.g., hinge device 140 of FIG. 1B). In this case, the electronic device 100 may control the first display 400 so that different kinds of content are displayed on the display area corresponding to the first surface 111 and the display area corresponding to the third surface 121. According to an embodiment, the electronic device 100 may operate in substantially the unfolded state (e.g., unfolded state of FIG. 1A) and/or in substantially the folded state (e.g., folded state of FIG. 2A) based on a specific folding angle (e.g., angle between the first housing 110 and the second housing 120 when the electronic device 100 is in the intermediate state) through the hinge device (e.g., hinge device 140 of FIG. 1B). In an embodiment, if a pressing force is provided in an unfolding direction (direction A) in a state where the electronic device 100 is unfolded at the specific folding angle through the hinge device (e.g., hinge device 140 of FIG. 1B), the electronic device 100 may operate to be transitioned to the unfolded state (e.g., unfolded state of FIG. 1A). In an embodiment, if the pressing force is provided in a folding direction (direction B) in a state where the electronic device 100 is unfolded at the specific folding angle through the hinge device (e.g., hinge device 140 of FIG. 1B), the electronic device 100 may operate to be transitioned to the folded state (e.g., folded state of FIG. 2A). In an embodiment, the electronic device 100 may operate to maintain the unfolded state (not illustrated) at various angles through the hinge device (e.g., hinge device 140 of FIG. 1B) (free-stop function).

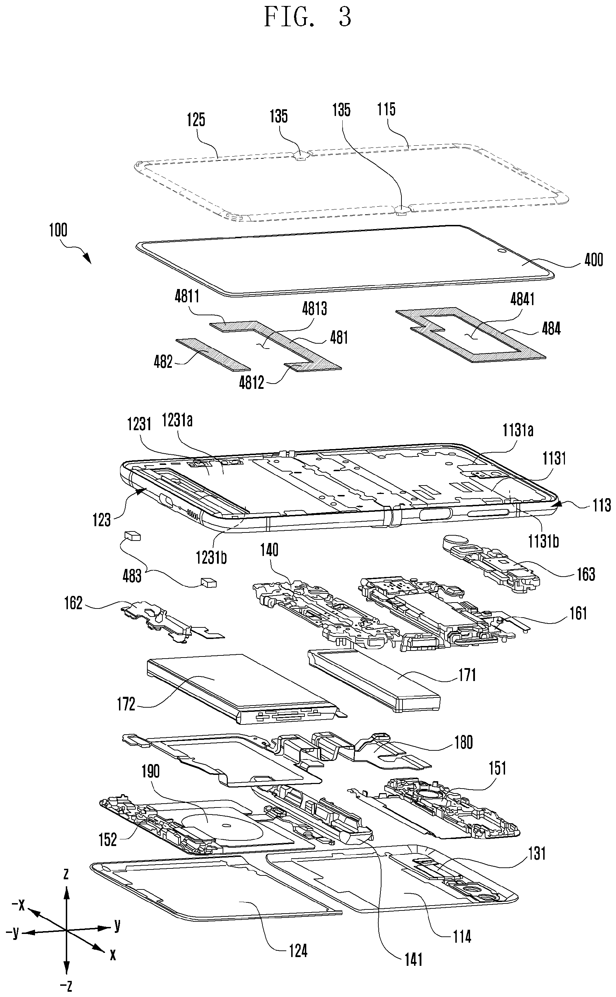

FIG. 3 is an exploded perspective view of an electronic device according to various embodiments of the disclosure.

With reference to FIG. 3, the electronic device 100 may include the first lateral member 113 (e.g., first lateral frame), the second lateral member 123 (e.g., second lateral frame), and the hinge device 140 (e.g., hinge module or hinge structure) rotatably connecting the first lateral member 113 and the second lateral member 123 to each other. According to an embodiment, the electronic device 100 may include a first support member 1131 (e.g., first support plate) extending at least partly from the first lateral member 113, and a second support member 1231 (e.g., second support plate) extending at least partly from the second lateral member 123. According to an embodiment, the first support member 1131 may be integrally formed with the first lateral member 113, or may be structurally combined with the first lateral member 113. In an embodiment, the second support member 1231 may be integrally formed with the second lateral member 123, or may be structurally combined with the second lateral member 123. According to an embodiment, the first display 400 may be disposed to be supported by the first support member 1131 and the second support member 1231. According to an embodiment, the electronic device 100 may include the first rear cover 114 combined with the first lateral member 113, and providing a first space together with the first support member 1131, and the second rear cover 124 combined with the second lateral member 123 and providing a second space together with the second support member 1231. In an embodiment, the first lateral member 113 and the first rear cover 114 may be integrally formed with each other. In an embodiment, the second lateral member 123 and the second rear cover 124 may be integrally formed. According to an embodiment, the first housing 110 may include the first lateral member 113, the first support member 1131, and the first rear cover 114. According to an embodiment, the second housing 120 may include the second lateral member 123, the second support member 1231, and the second rear cover 124. According to an embodiment, the electronic device 100 may include the second display 131 disposed to be viewed from the outside through at least a partial area of the first rear cover 114.

According to various embodiments, the electronic device 100 may include a first board 161 (e.g., first board assembly or main printed circuit board) disposed in the first space between the first lateral member 113 and the first rear cover 114, a camera assembly 163, a first battery 171, or a first bracket 151. According to an embodiment, the camera assembly 163 may include a plurality of camera devices (e.g., camera devices 105 and 108 of FIGS. 1A and 2A), and may be electrically connected to the first board 161. According to an embodiment, the first bracket 151 may provide a support structure for supporting the first board 161 and/or the camera assembly 163 and improved stiffness. According to an embodiment, the electronic device 100 may include a second board 162 (e.g., second board assembly or sub-printed circuit board) disposed in the second space between the second lateral member 123 and the second rear cover 124, an antenna 190 (e.g., coil member), a second battery 172, or a second bracket 152. According to an embodiment, the electronic device 100 may include a plurality of electronic components (e.g., wiring member 180 (e.g., flexible printed circuit board (FPCB)) disposed to extend up to the second board 162, the second battery 172, or the antenna 190, and providing an electrical connection) disposed between the second lateral member 123 and the second rear cover 124 across the hinge device 140 from the first board 161. According to an embodiment, the antenna 190 may include a near field communication (NFC) antenna, a wireless charging antenna, and/or a magnetic secure transmission (MST) antenna.

According to various embodiments, the electronic device 100 may also include a first protection cover 115 (e.g., first protection frame or first decoration member) combined along an edge of the first housing 110, and a second protection cover 125 (e.g., second protection frame or second decoration member) combined along an edge of the second housing 120. According to an embodiment, the first protection cover 115 and/or the second protection cover 125 may be formed of a metal or polymer material. According to an embodiment, the first protection cover 115 and/or the second protection cover 125 may be used as the decoration members. In this case, the first display 400 may be disposed so that the edge of the first area 130a is not viewed from the outside between the first housing 110 and the first protection cover 115. According to an embodiment, the first display 400 may be disposed so that the edge of the second area 130b is not viewed from the outside between the second housing 120 and the second protection cover 125.

According to various embodiments, the electronic device 100 may also include a protection cap 135 disposed to protect the edge of the third area (e.g., third area 130c of FIG. 1B) of the first display 400. In this case, the edge of the first display 400 can be protected through the protection cap 135 disposed at a location corresponding to the folding area (e.g., folding area 130c of FIG. 1B).

According to various embodiments, the first support member 1131 may include a first support surface 1131a directed in the first direction (z-axis direction), and a second support surface 1131b directed in the second direction (-z-axis direction) that is opposite to the first direction. According to an embodiment, the second support member 1231 may include a third support surface 1231a directed in the first direction and a fourth support surface 1231b directed in the second direction in the unfolded state of the electronic device 100. According to an embodiment, the first display 400 may be disposed to be supported by the first support surface 1131a of the first support member 1131 and the third support surface 1231a of the second support member 1231.

According to various embodiments, the electronic device 100 may include at least one waterproof member 481, 482, 483, and 484 disposed between the first display 400 and the second support member 1231 and between the first display 400 and the first support member 1131. According to an embodiment, some waterproof members 481, 482, and 483 of the at least one waterproof member 481, 482, 483, and 484 may include the first waterproof member 481 disposed between the first display 400 and the second support member 1231, the second waterproof member 482 connected to the first waterproof member 481, and the third waterproof member 483 that provides a first waterproof space 4813 by connecting one end 4811 of the first waterproof member 481 to one end of the second waterproof member 482 and by connecting the other end 4812 of the first waterproof member 481 to the other end of the second waterproof member 482. In an embodiment, the first waterproof member 481, the second waterproof member 482, and/or the third waterproof member 483 may be integrally formed. According to an embodiment, the waterproof member 484 of the at least one waterproof member 481, 482, 483, and 484 may include the fourth waterproof member 484 that provides a second waterproof space 4841 in the shape of a closed loop disposed between the first display 400 and the first support member 1131. According to an embodiment, a plurality of electronic elements including a control circuit (e.g., display driver IC (DDI)) of the first display 400 are disposed in the first sealed waterproof space 4813 formed through the first waterproof member 481, the second waterproof member 482, and the third waterproof member 483 between the first display 400 and the second support member 1231, and thus can be protected from external moisture and/or foreign substances. According to an embodiment, at least one electronic component (e.g., sensor module (e.g., sensor module 104 of FIG. 1A) and/or camera device (e.g., camera device 105 of FIG. 1A)) disposed through the first support member 1131 is disposed in a second waterproof space 4841 formed by the closed loop shape of the fourth waterproof member 484 between the first display 400 and the first support member 1131, and thus can be protected from the external moisture and/or foreign substances. The kinds of the constituent elements disposed in the first waterproof space 4813 and/or the second waterproof space 4841 according to various embodiments are not limited.

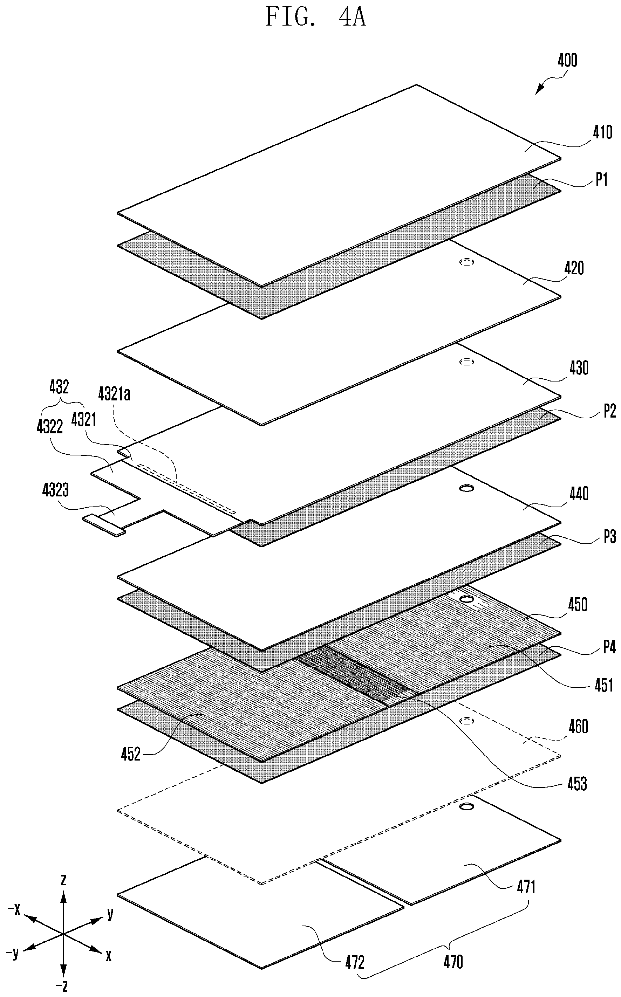

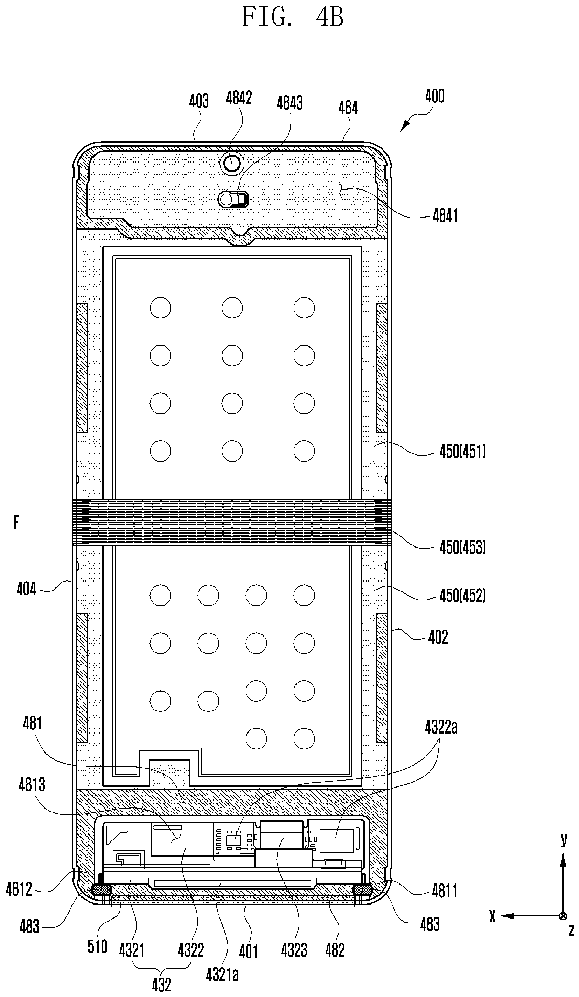

FIG. 4A is an exploded perspective view of a flexible display according to various embodiments of the disclosure. FIG. 4B is a configuration diagram of a flexible display when viewed from a rear surface thereof according to various embodiments of the disclosure.

The flexible display 400 of FIGS. 4A and 4B may be similar to the first display 400 of FIG. 1A at least partly, or may further include other embodiments of the flexible display. For example, components of the first display 400 of FIG. 1A may be omitted in the flexible display 400 of FIGS. 4A and 4B.

The display (e.g., flexible display 400) according to exemplary embodiments of the disclosure may include an unbreakable (UB) type OLED display (e.g., curved display). However, the flexible display 400 is not limited thereto, and may include an unbreakable (UB) type OLED display (e.g., curved display). However, the display is not limited thereto, and the flexible display 400 may include a flat type display of an on cell touch active matrix organic light-emitting diode (AMOLED) (OCTA) type.

With reference to FIGS. 4A and 4B, the flexible display 400 may include a polarization layer (polarizer (POL)) 420 (e.g., polarization film) sequentially disposed on the rear surface (e.g., -z-axis direction) of a window layer 410, a display panel 430, a polymer layer 440, a support plate 450, and reinforcement plates 471 and 472. In a certain embodiment, the flexible display 400 may also include a digitizer 460 disposed between the support plate 450 and the reinforcement plates 471 and 472 (e.g., reinforcement plate 470). In a certain embodiment, the digitizer 460 may be disposed between the polymer layer 440 and the support plate 450. For example, in case that the flexible display 400 is a POL-less display, the polarization layer may be omitted, and a transparent reinforcement layer (e.g., buffer layer) may be further disposed at that location. In a certain embodiment, the reinforcement plates 471 and 472 may be omitted.

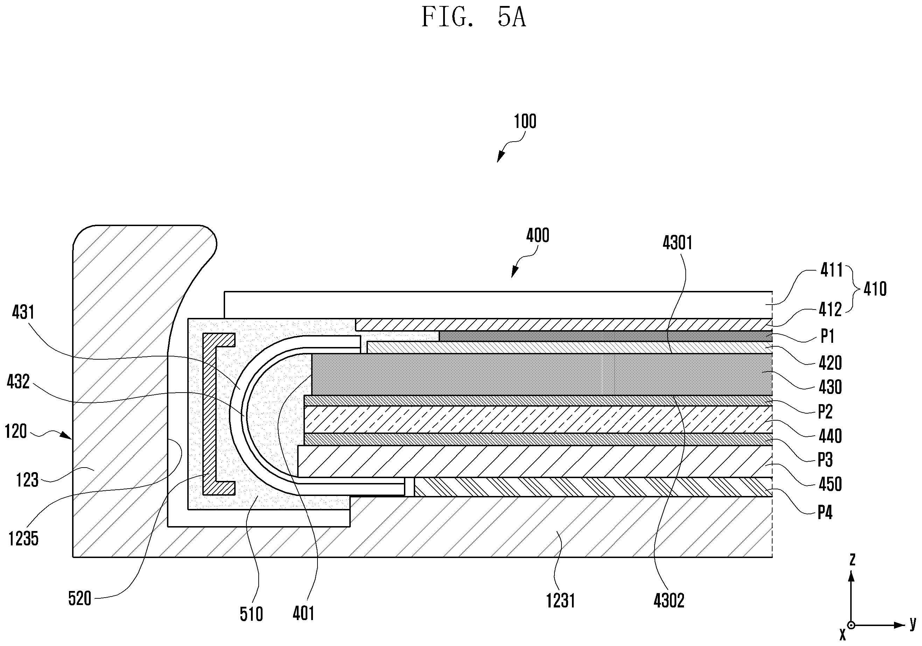

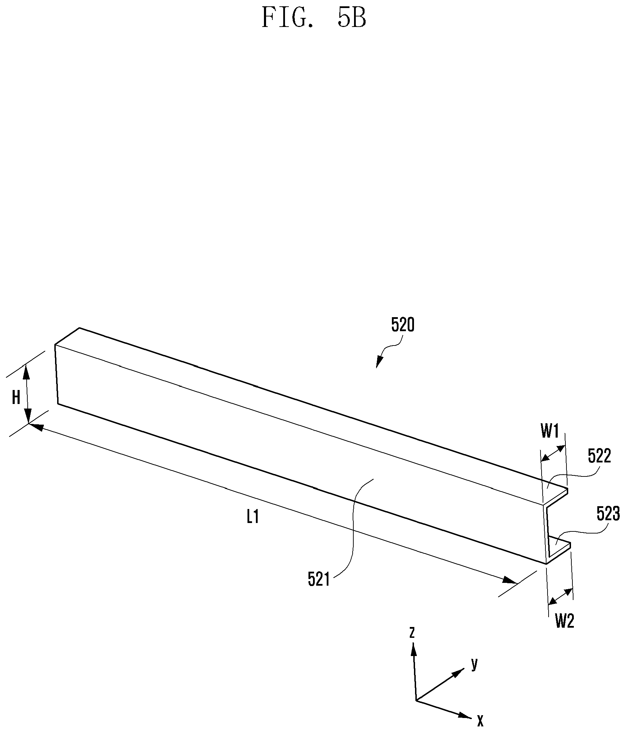

According to various embodiments, the window layer 410 may include a first layer (e.g., first layer 411 of FIG. 5) and a second layer (e.g., second layer 412 of FIG. 5) which are sequentially laminated. According to an embodiment, the first layer 411 may be formed of polymer (e.g., polyethylene terephthalate (PET), polyimide (PI), or thermoplastic polyurethane (TPU)). According to an embodiment, the second layer 412 may be formed of glass. According to an embodiment, the second layer may include ultrathin glass (UTG). In a certain embodiment, the flexible display 400 may be formed as a part of the window layer 410, and may further include a coating layer disposed on an upper part of the first layer 411. In this case, the coating layer may include a hard coating (HC) layer, an anti-reflection (AF) / low-reflection (LR) coating layer, a shatterproof (SP) coating layer, or an anti-fingerprint (AF) coating layer. In a certain embodiment, the coating layer may be formed on at least one part of between the first layer 411 and the second layer 412, a side surface of the first layer 411, a rear surface or a side surface of the second layer 412.

According to various embodiments, the window layer 410, the polarization layer 420, the display panel 430, the polymer layer 440, and the support plate 450 may be disposed to cross at least parts of the first surface (e.g., first surface 111 of FIG. 1A) of the first housing (e.g., first housing 110 of FIG. 1A) and the third surface (e.g., third surface 121 of FIG. 1A) of the second housing (e.g., second housing 120 of FIG. 1A). According to an embodiment, the reinforcement plate 470 may include the first reinforcement plate 471 corresponding to the first housing (e.g., first housing 110 of FIG. 1A), and the second reinforcement plate 472 corresponding to the second housing (e.g., second housing 120 of FIG. 1A). According to an embodiment, the reinforcement plate 470 may provide the stiffness for the flexible display 400, and may be used as a ground for preventing malfunction of the flexible display 400. According to an embodiment, the reinforcement plate 470 may be formed of a metal material. According to an embodiment, the reinforcement plate 470 may be formed of SUS or Al. According to an embodiment, the window layer 410, the polarization layer 420, the display panel 430, the polymer layer 440, the support plate 450, and the reinforcement plate 470 may be attached to one another through adhesive members P1, P2, P3, and P4 (or adhesives). For example, the adhesive members P1, P2, P3, and P4 may include at least one of an optical clear adhesive (OCA), a pressure sensitive adhesive (PSA), a thermal reaction adhesive, a general adhesive, or a double-sided tape. Different types of adhesives may be used for the adhesive members P1, P2, P3, and P4.

According to various embodiments, the display panel 430 may include a plurality of pixels and a wiring structure (e.g., electrode pattern). According to an embodiment, the polarization layer 420 may selectively pass light generated from a light source of the display panel 430 and vibrating in a predetermined direction. According to an embodiment, the display panel 430 and the polarization layer 420 may be integrally formed with each other. According to an embodiment, the flexible display 400 may also include a touch panel (not illustrated).

According to various embodiments, since the polymer layer 440 is disposed under the display panel 430, it may provide a dark background for securing visibility of the display panel 430, and may be formed of a buffer material for a buffering action. In a certain embodiment, for waterproofing of the flexible display 400, the polymer layer 440 may be deleted, or may be disposed under the support plate 450. In a certain embodiment, the polymer layer 440 may be omitted in case that the support plate 450 is formed of an opaque material.

According to various embodiments, the support plate 450 may provide the flexural characteristic to the flexible display 400. For example, the support plate 450 may be formed of a non-metal thin plate material, such as fiber reinforced plastics (FRP) (e.g., carbon fiber reinforced plastics (CFRP) or glass fiber reinforced plastics (GFRP)), having the rigid characteristic for supporting the display panel 430. According to an embodiment, the support plate 450 may include a first plane part 451 corresponding to the first housing (e.g., first housing 110 of FIG. 1A), a second plane part 452 corresponding to the second housing (e.g., second housing 120 of FIG. 1A), and a flexible part 453 (flexible portion or bending portion) connecting the first plane part 451 and the second plane part 452 to each other. According to an embodiment, in order to improve the flexibility, the flexible part 453 may include a plurality of openings formed to penetrate from the upper surface to the rear surface of the support plate 450 and/or a plurality of recesses formed on a part of the upper surface and/or a part of the rear surface thereof. According to an embodiment, the flexibility characteristic of the flexible part 453 may be determined through at least one of the size, shape, or disposition density of at least some of the plurality of openings and/or at least some of the plurality of recesses. In a certain embodiment, the support plate 450 may be formed of a metal material, such as steel use stainless (SUS) (e.g., stainless steel (STS), Cu, Al, or CLAD (e.g., laminated member in which SUS and Al are alternately disposed). In this case, the plurality of openings may be formed over the whole area so that the detection operation of the digitizer 461 disposed under the support plate 450 is induced. According to an embodiment, the support plate 450 may help the stiffness reinforcement of the electronic device (e.g., electronic device 100 of FIG. 1A), shield surrounding noises, and be used to disperse heat emitted from surrounding heat emission components.

According to various embodiments, the display 400 may include a digitizer 460 disposed under the support plate 450 as a detection member accommodating an input of an electronic pen (e.g., stylus pen). According to an embodiment, the digitizer 460 may include coil members disposed on a dielectric board (e.g., dielectric film or dielectric sheet) so as to detect an electromagnetic induction type resonance frequency applied from the electronic pen. In a certain embodiment, the digitizer 460 may include a first digitizer disposed in an area corresponding to the first housing (e.g., first housing 110 of FIG. 1A), and a second digitizer electrically connected to the first digitizer and disposed in an area corresponding to the second housing (e.g., second housing 120 of FIG. 1A).

According to various embodiments, the flexible display 400 may include at least one functional member (not illustrated) disposed between the polymer layer 440 and the support plate 450, or under the support plate 450. According to an embodiment, the functional member may include a graphite sheet for heat dissipation, a force touch FPCB, a fingerprint sensor FPCB, an antenna radiator for communication, or a conductive/non-conductive tape. According to an embodiment, in case that the functional member is unable to be bent, it may be individually disposed on the first housing (e.g., first housing 110 of FIG. 1A) and the second housing (e.g., second housing 120 of FIG. 1A). According to an embodiment, in case that the functional member is able to be bent, it may be disposed from the first housing (e.g., first housing 110 of FIG. 1A) to at least a part of the second housing (e.g., second housing 120 of FIG. 1A) through the hinge device (e.g., hinge device 140 of FIG. 3).

According to various embodiments, the flexible display 400 may be formed in a quadrangular shape. However, the flexible display 400 is not limited to such shape and may also have a circular shape. According to an embodiment, the flexible display 400 may include a first edge 401, a second edge 402 extending in a vertical direction from the first edge 401, a third edge 403 extending in a direction parallel to the first edge 401 from the second edge 402, and a fourth edge 404 extending from the third edge 403 to the first edge 401. According to an embodiment, the first edge 401 may be disposed at a location corresponding to the fourth side surface (e.g., fourth side surface 123a of FIG. 1A) of the second housing (e.g., second housing 120 of FIG. 1A). According to an embodiment, the second edge 402 may be disposed at a location corresponding to the second side surface (e.g., second side surface 113b of FIG. 1A) of the first housing (e.g., first housing 110 of FIG. 1A) and the fifth side surface (e.g., fifth side surface 123b of FIG. 1A) of the second housing (e.g., second housing 120 of FIG. 1A). According to an embodiment, the third edge 403 may be disposed at a location corresponding to the first side surface (e.g., first side surface 113a of FIG. 1A) of the first housing (e.g., first housing 110 of FIG. 1A). According to an embodiment, the fourth edge 404 may be disposed at a location corresponding to the third side surface (e.g., third side surface 113c of FIG. 1A) of the first housing (e.g., first housing 110 of FIG. 1A) and the sixth side surface (e.g., sixth side surface 123c of FIG. 1A) of the second housing (e.g., second housing 120 of FIG. 1A). According to the invention, the flexible display 400 includes a bending part 432. According to an embodiment, the bending part 432 may be disposed so as to be folded from the display panel 430 to at least a partial area of the rear surface (e.g., -z-axis direction) of the flexible display 400. According to an embodiment, the bending part 432 may include an extension part 4321 extending from the display panel 430 and including a control circuit 4321a and a flexible board 4322 electrically connected to the extension part 4321 and including a plurality of electronic elements. According to an embodiment, the control circuit 4321a may include a display driver IC (DDI) or a touch display driver IC (TDDI) mounted on the extension part 4321 having an electrical wiring structure. According to an embodiment, the bending part 432 may include a chip on panel or chip on plastic (COP) structure in which the control circuit 4321a is directly disposed on the extension part 4321. In a certain embodiment, the bending part 432 may include a chip on film (COF) structure in which the control circuit 4321a is mounted on a separate connection film (not illustrated) that connects the extension part 4321 and the flexible board 4322 to each other. According to the invention, the flexible display 230 includes a plurality of electronic elements (e.g., electronic elements 4322a of FIG. 4B) disposed on the flexible board 4322. According to an embodiment, the flexible display 230 may include an FPCB connection part 4323 (e.g., connector part) extending from the flexible board 4322 and electrically connected to the board (e.g., second board 162 of FIG. 3) of the electronic device (e.g., electronic device 100 of FIG. 3). According to an embodiment, the plurality of electronic elements may include a touch IC, a flash memory for display, a diode for preventing the ESD, a pressure sensor, a fingerprint sensor, or a passive element such as a decoupling capacitor (decap). As another embodiment, in case that the bending part 432 is disposed on the area of the flexible display 400 that faces the first housing (e.g., first housing 110 of FIG. 1A), the FPCB connection part 4323 may be electrically connected to another board (e.g., first board 161 of FIG. 3) of the electronic device (e.g., electronic device 100 of FIG. 3).

According to various embodiments, the electronic device (e.g., electronic device 100 of FIG. 3) may include at least one waterproof member 481, 482, 483, and 484. According to an embodiment, the at least one waterproof member 481, 482, and 483 may include the first, second, and third waterproof members 481, 482, and 483 corresponding to at least a part of the second housing (e.g., second housing 120 of FIG. 1A), and disposed to form a first waterproof space 4813 for substantially protecting the control circuit 4321a disposed on the extension part 7321 of the bending part 432 and the plurality of electronic elements 4322a disposed on the flexible board 4322 from the external moisture and/or the foreign substances. According to an embodiment, the at least one waterproof member may include the fourth waterproof member 484 disposed to correspond to the at least a part of the second housing. According to an embodiment, the fourth waterproof member 484 may provide a second sealed waterproof space 4841. According to an embodiment, the electronic device (e.g., electronic device 100 of FIG. 1A) may include at least one electronic component disposed in a first disposition area 4842 and a second disposition area 4843 provided in at least a partial area of the second waterproof space 4841. According to an embodiment, the at least one electronic component may include a camera device (e.g., camera device 105 of FIG. 1A) disposed in the first disposition area 4842, and a sensor module (e.g., sensor module 104 of FIG. 1A) disposed in the second disposition area 4843.

According to the invention, the an electronic device (e.g., electronic device 100 of FIG. 1A) includes a buffer part 510 (e.g., molding part, protection part, protection layer, coating layer, filling member or soft molding). According to exemplary embodiments of the disclosure, the buffer part 510 (e.g., molding part, protection part, protection layer, coating layer, filling member or soft molding) may be disposed to surround at least the bending part 432 at the first edge 401 of the flexible display 400. In an embodiment, the buffer part 510 may be formed in a manner that the molding liquid injected through the molding injector is cured. According to an embodiment, the cured molding liquid may be disposed to protect the bending part 432 as the buffer part 510 (e.g., soft molding) has a designated molding modulus value. For example, the molding modulus value of the buffer part 510 is equal to or smaller than about 10 MPa, and thus may accommodate an interlayer slip phenomenon of the flexible display occurring during folding, and help the surface quality improvement of the flexible display 400. According to the invention, the electronic device 100 includes a protection member (e.g., protection member 520 of FIG. 5A) embedded in the buffer part 510 at least partly. In an embodiment, since the protection member 520 is disposed in a manner of surrounding or covering at least a part of the bending part 432 at a location spaced apart from the bending part 432, and is formed of a rigid material, it may help the durability improvement of the flexible display 400 against external impact.

FIG. 5A is a partial cross-sectional view of an electronic device when viewed along line 5a-5a of FIG. 1A according to various embodiments of the disclosure. FIG. 5B is a perspective view of an exemplary protection member according to various embodiments of the disclosure.

With reference to FIGS. 5A and 5B, an electronic device 100 includes a first housing (e.g., first housing 110 of FIG. 1A; not shown in Fig. 5A), a second housing 120 combined in a foldable manner with the first housing 110 through a hinge device (e.g., hinge device 140 of FIG. 3), and a flexible display 400 disposed to be supported by the first housing 110 and the second housing 120. According to an embodiment, the flexible display 400 may include a display panel 430, a POL 420 sequentially laminated on an upper surface 4301 (e.g., first surface) of the display panel 430, a window layer 410, a polymer layer 440 sequentially laminated on a rear surface 4302 (e.g., second surface) of the display panel 430, and a support plate 450. In certain embodiments, at least one of the aforementioned components may also be omitted. According to an embodiment, the window layer 410, the polarization layer 420, the display panel 430, the polymer layer 440, and the support plate 450 may be attached to one another through adhesive members P1, P2, P3, and P4 (or adhesives). In a certain embodiment, the support plate 450 may be attached to a reinforcement plate (e.g., reinforcement plate 470 of FIG. 4) disposed between the support plate 450 and the housings 110 and 120 through the adhesive member. According to an embodiment, the window layer 410 may include a first layer 411 (e.g., PET layer or TPU layer) formed of polymer, and a second layer 412 (e.g., UTG layer) disposed under the first layer 411 and formed of glass. In a certain embodiment, the polarization layer 420 may be omitted.

According to various embodiments, the flexible display 400 may be disposed so that at least a part of the flexible display 400 is supported by a second lateral member 123 and a second support member 1231 extending from the second lateral member 123 to the inner space in the second housing 120. In an embodiment, the flexible display 400 may include a plane part disposed on at least a part of the first housing 110 and disposed to be supported by the first housing 110. The flexible display 400 includes a bending part 432 (e.g., COP or COF) extending from the display panel 430 (e.g., from the plane part) and being bent to a rear surface of the flexible display 400 at a first edge 401 (e.g., first edge area) (e.g., first edge 401 of the flexible display 400) near a side wall 1235 (e.g., side wall of the second housing 120 or inner side wall of the second housing 120), corresponding to the fourth side surface (e.g., fourth side surface 123a of FIG. 1A) of the second housing 120. In an embodiment, the bending part 432 may be protected through a protection layer 431. In an embodiment, the flexible display 400 may be disposed not to overlap the second lateral member 123 when the flexible display 400 is viewed from above. In an embodiment, the bending part 432 may also be disposed not to overlap the second lateral member 123 when the flexible display 400 is viewed from above (e.g., when the flexible display 400 is viewed in a vertical direction, when the surface of the flexible display 400 is viewed in a vertical direction, or when the flexible display 400 is viewed along a z-axis direction.

According to various embodiments, the electronic device 100 includes a buffer part 510 (e.g., molding part) disposed to surround the bending part 432 in the second housing 120. In an embodiment, the buffer part 510 may be disposed to surround edges of layers (e.g., window layer 410) laminated on the upper surface of the display panel 430 and layers (e.g., polymer layer 440 and/or support plate 450) laminated on the rear surface 4302 thereof at the first edge 401 of the flexible display 400. In an embodiment, the bending part 432 may be located in the buffer part 510 formed after a liquefied molding liquid injected around the first edge 401 of the flexible display 400 is cured. In an embodiment, the buffer part 510 may be formed in a manner that the molding liquid injected through the molding injector is cured. For example, the molding liquid may be cured through at least one of natural curing, heat curing, or UV curing. In an embodiment, the buffer part 510 may be formed of a material (e.g., soft molding liquid) having the molding modulus value equal to or smaller than about 10 MPa when the molding liquid is cured. In a certain embodiment, the buffer part 510 may be formed of a material having the molding modulus value equal to or smaller than about 5 MPa when the molding liquid is cured. In a certain embodiment, the buffer part 510 may be formed of a material having the molding modulus value equal to or smaller than about 1 MPa when the molding liquid is cured. In an embodiment, the buffer part 510 may be cured through a silicone-based molding liquid. In an embodiment, since the buffer part 510 accommodates the slip phenomenon between the layers (e.g., window layer 410 and display panel 430) of the flexible display 400 that occurs by the folding/unfolding operation of the electronic device 400, the occurrence of inferiority, such as the buckling phenomenon, can be reduced to help the improvement of the surface quality of the flexible display 400. In a certain embodiment, the buffer part 510 may also be formed in a manner of being coated with a designated thickness by an elastic material or in a manner of being attached.

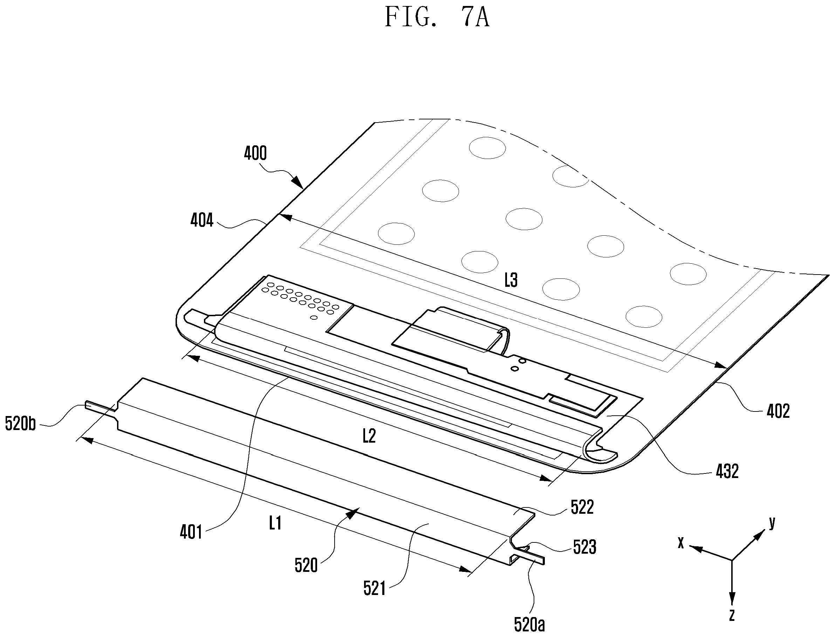

According to the invention, the electronic device 100 includes a protection member (e.g., rigid body) 520 that is at least partly embedded inside the buffer part 510. According to the embodiment of FIG. 5A, the protection member 520 may also be fully embedded inside the buffer part 510. In an embodiment, as shown in FIG. 5B, the protection member 520 may include a plate part 521, a first extension part 522 (e.g., first bent part or first bending part) bent from an upper end of the plate part 521 in a direction of the bending part (e.g., y-axis direction), and a second extension part 523 bent from a lower end of the plate part 521 in the direction of the bending part (e.g., y-axis direction). In an embodiment, the plate part 521 may be formed to have a first length L1 in the x-axis direction, and a first height H in the z-axis direction. In an embodiment, the first length L1 may be set to be equal to or longer than a second length (e.g., second length L2 of FIG. 7A) in the x-axis direction of the bending part 432. This may allow fixing the protection member 520.

In an embodiment, the width W1 of the first extension part 522 and the width W2 of the second extension part 523 may be equal to or different from each other. Increasing width W1 and/or width W2 may provide additional protection to an upward side (display side) and/or a backward side (rear side) of the flexible display 400. In an embodiment, the first extension part 522 and/or the second extension part 523 may be bent at right angles. In a certain embodiment, the first extension part 522 and/or the second extension part 523 may be bent to have an obtuse angle or an acute angle against the plate part 521. In an embodiment, the first extension part 522 and/or the second extension part 523 may be formed as a plane or a curved surface.

According to various embodiments, the protection member 520 may be disposed so that the plate part 521 overlaps at least the bending part 432 when the second lateral member 123 is viewed from outside (e.g., viewed in the y-axis direction), (when viewed in a direction vertical to the side wall 1235). In an embodiment, the protection member 520 may be disposed to be spaced apart from the bending part 432 at designated intervals. In an embodiment, at least a part of the protection member 520 may be formed in a shape that surrounds at least a part of the bending part 432. In an embodiment, the protection member 520 may be formed in a " 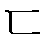 " shape. In an embodiment, the protection member 520 may be formed of a material having strength for improving durability of the bending part 432 against an external impact. In an embodiment, the protection member 520 may include at least one of a metal (e.g., SUS), PC, or FRP (e.g., CFRP and/or GFRP). In an embodiment, since the protection member 520 protects the bending part 432, it may help the durability improvement of the flexible display 400.

According to various embodiments, an edge of the window layer 410 may be disposed to overlap the bending part 432 or to overlap the bending part 432 with a larger size when the flexible display 400 is viewed from above. Hence, no gap or space between the window layer 410 and the lateral member 123 of the second housing 120 may be visible. In an embodiment, the edge of the first layer 411 may be disposed with a size that overlaps at least the bending part 432 when the flexible display 400 is viewed from above. In an embodiment, the edge of the first layer 411 may be disposed with a size that overlaps at least a part of the protection member 520 when the flexible display 400 is viewed from above. In an embodiment, the edge of the first layer 411 may be disposed with a size that overlaps at least the buffer part 510 when the flexible display 400 is viewed from above.

According to various embodiments, when the molding liquid is injected to form the buffer part 510, the respective layers (e.g., display panel 430, polymer layer 440, and support plate 450) of the flexible display 400 may be formed to have a positive step difference structure for uniform application of the molding liquid at the first edge 401. In an embodiment, each of the layers 430, 440, and 450 may be disposed so that edges of the layers disposed under the corresponding layer can be viewed at the first edge 401 when the flexible display 400 is viewed from above. For example, the polymer layer 440 may be disposed closer to the bending part 432 than the display panel 430 at the first edge 401 when the flexible display 400 is viewed from above. In an embodiment, the support plate 450 may be disposed closer to the bending part 432 than the polymer layer 440 at the first edge 401 when the flexible display 400 is viewed from above. This allows the different bending radii of the respective components to be taken into account.

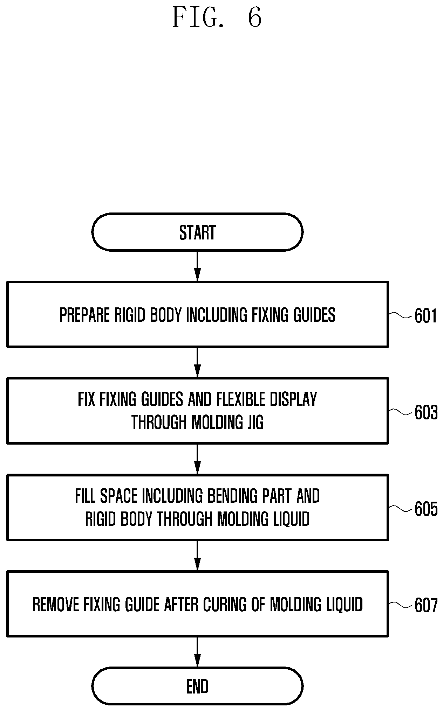

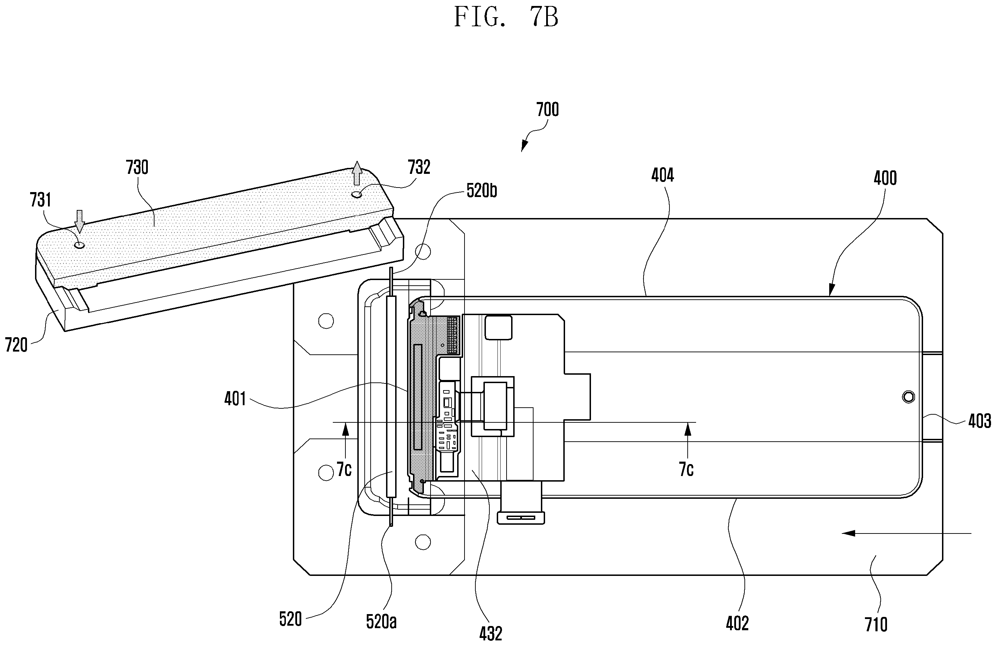

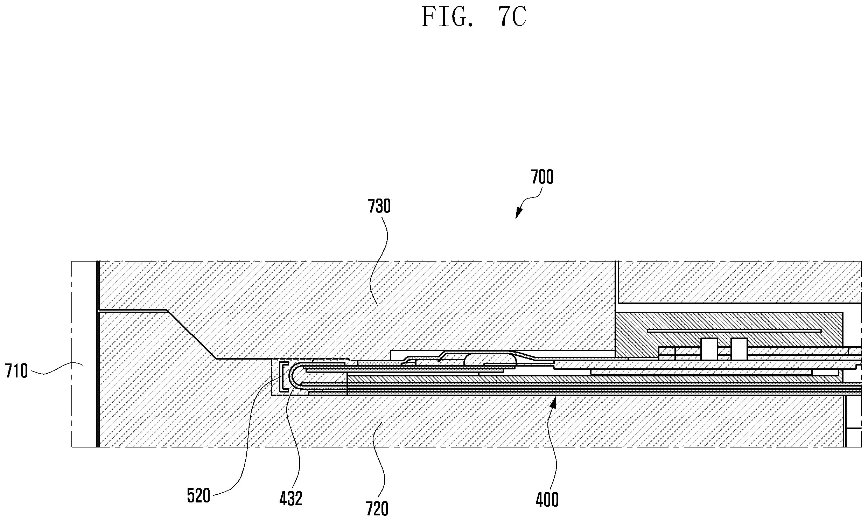

FIG. 6 is a process chart for applying buffer part and a protection member (rigid body) to a flexible display according to various embodiments of the disclosure. FIGS. 7A to 7E are schematic diagrams illustrating a process for applying a buffer part and a protection member to a flexible display according to various embodiments of the disclosure. FIG. 7C is a partial cross-sectional view of a jig for molding when viewed along line 7c-7c of FIG. 7B.

With reference to FIGS. 5A to 7E, in a first process step 601, a protection member 502 including fixing guides 520a and 520b may be prepared. In an embodiment, as illustrated in FIG. 7A, the protection member 520 may be formed to have a first length L1. In an embodiment, the protection member 520 may be formed so that the first length L1 in the width direction (e.g., x-axis direction) is equal to or longer than a second length L2 of the bending part 432 of the flexible display 400. In an embodiment, the first length L1 of the protection member 520 may be set to be equal to or shorter than the entire length L3 in the width direction (e.g., x-axis direction) of the flexible display 400. For example, the first length L1 of the protection member 520 may be set to be longer than the second length L2 of the bending part 432, and to be shorter than the entire length L3 in the width direction of the flexible display 400. In an embodiment, the protection member 520 may include the fixing guides 520a and 520b formed to extend at both ends of the plate part 521. In an embodiment, the fixing guides 520a and 520b may be used as an alignment and fixing means for disposing the protection member 520 to be spaced apart from the bending part 432 at designated intervals on the jig 710 for molding.

According to various embodiments, a second process step 603 may include an operation of fixing the fixing guides 520a and 520b of the protection member 520 and the flexible display 400 through the jig 710 for molding. In an embodiment, as illustrated in FIGS. 7B and 7C, the flexible display 400 may be aligned on the jig 710 for molding (e.g., Teflon jig) of molding equipment 700. In this case, the first edge 401 of the flexible display 400 may be disposed between a lower mold 720 and an upper mold 730 on the jig 710 for molding. In an embodiment, the protection member 520 may also be aligned at a location spaced apart from the bending part 432 between the lower mold 720 and the upper mold 730 through the fixing guides 520a and 520b. In an embodiment, the fixing guides 520a and 520b may be disposed at locations that are not embedded in the buffer part. According to an embodiment, the upper mold 720 and the lower mold 730 may be formed of a silicone material. For example, the upper mold 730 may include an inlet 731 for injecting the molding liquid and an outlet 732 for discharging the over-injected molding liquid. According to an embodiment, the inlet 731 and the outlet 732 may be disposed at locations corresponding to the both ends of the bending part 432 along the length direction (e.g., x-axis direction) at the first edge 401 of the flexible display 400.

According to various embodiments, in a third process step 605, a space including the bending part 432 and the protection member 520 may be filled through the molding liquid. For example, if the molding liquid is injected into the inlet 731 of the upper mold 730, the space including the bending part 432 of the flexible display 400 may be filled with the molding liquid, and the molding liquid may be cured as the buffer part 510 through at least one of natural curing, heat curing, or UV curing.

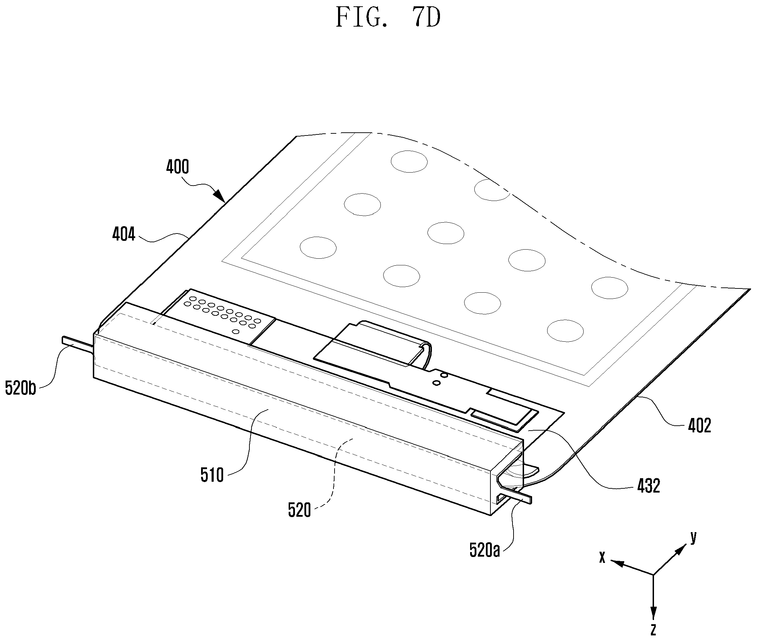

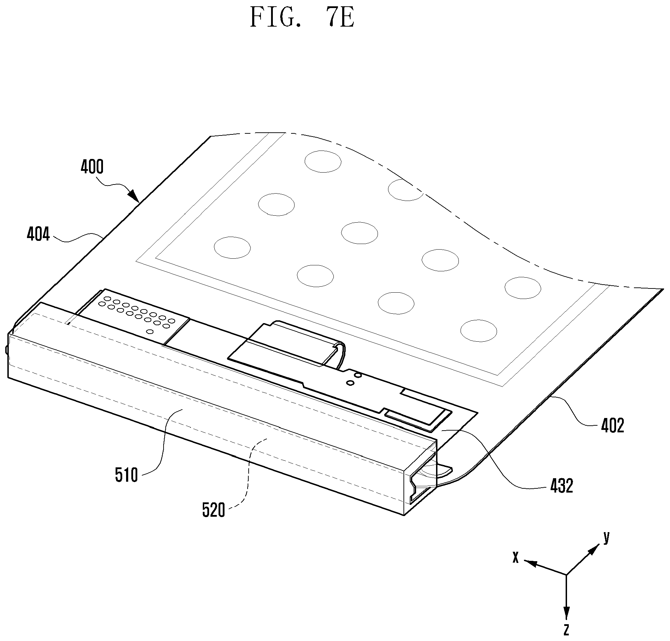

According to various embodiments, in a fourth process step 607, after the curing of the molding liquid, as illustrated in FIGS. 7D and 7E, the fixing guides 520a and 520b protruded at the both ends of the buffer part 510 may be removed through a cutting process.

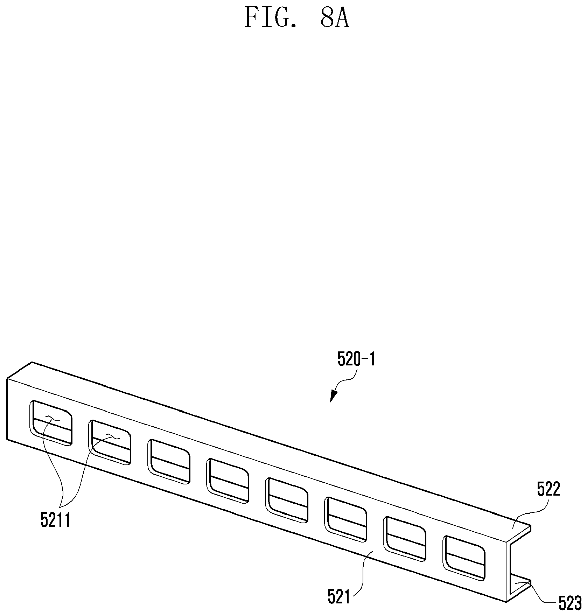

FIGS. 8A to 8C are views illustrating various embodiments of a protection member according to various embodiments of the disclosure.

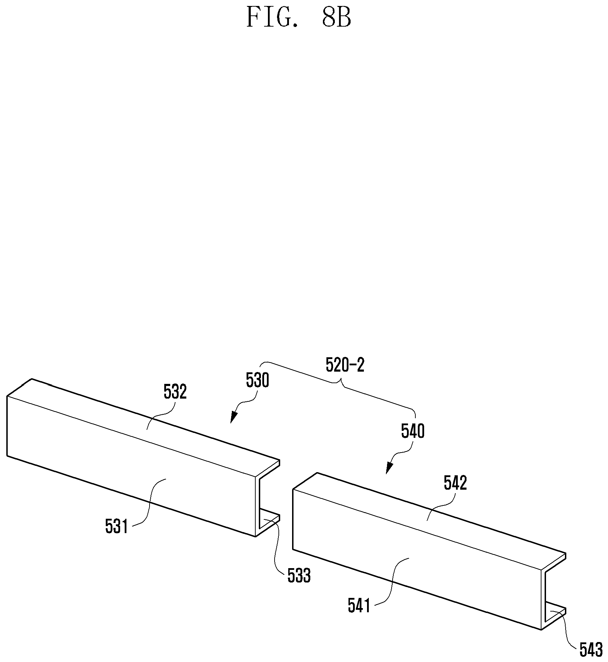

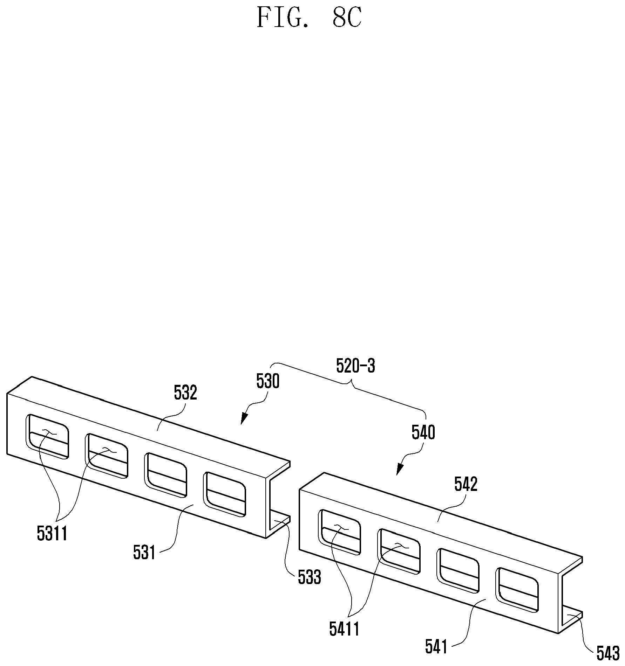

Protection members 520-1, 520-2, and 520-3 of FIGS. 8A to 8C may be similar to the protection member 520 of FIG. 5A at least partly, or may further include other embodiments of the protection member. The protection members 520-1, 520-2, and 520-3 may comprise one part only (as in FIG. 8A) or more than one part (as in FIGS. 8B and 8C), e.g. two, three or even more parts, which are also referred to as sub protection members.

In describing the protection members 520-1, 520-2, and 520-3 of FIGS. 8A to 8C, the same reference numerals are used for the constituent elements substantially the same as those of the protection member 520 of FIG. 5B, and the detailed description thereof may be omitted.

With reference to FIG. 8A, the protection member 520-1 may include a plate part 521, a first extension part 522 bent from one end of the plate part 521, and a second extension part 523 bent from the other end of the plate part 521. In an embodiment, the protection member 520-1 may include a plurality of openings 5211 (e.g., opening holes) formed on the plate part 521 at designated intervals. According to an embodiment, the plurality of openings 5211 may be formed with the same or different shapes or sizes. According to an embodiment, the plurality of openings 5211 may help the improvement of molding compatibility through rigidity reinforcement, lightweight, or injection area expansion of the electronic device. In an embodiment, at least some of the plurality of openings 5211 may be replaced by a plurality of recesses.

With reference to FIG. 8B, the protection member 520-2 may include a pair of sub protection members 530 and 540 spaced apart from each other. In an embodiment, the pair of sub protection members 530 and 540 may include the first sub protection member 530 and the second sub protection member 540 having lengths in the same direction and spaced apart from each other at designated intervals. In an embodiment, the first sub protection member 530 may include a first plate part 531, a first extension part 532 bent from one end of the first plate part 531, and a second extension part 533 bent from the other end of the first plate part 531. In an embodiment, the second sub protection member 540 may include a second plate part 541, a third extension part 542 bent from one end of the second plate part 541, and a fourth extension part 543 bent from the other end of the second plate part 541. For example, the first, second, third, and fourth extension parts 532, 533, 542, and 543 may be formed to have the same or different shapes. In a certain embodiment, the protection member 520-2 may include three or more sub protection members disposed to be spaced apart from one another at designated intervals.

With reference to FIG. 8C, a plurality of first openings 5311 formed on the plate part 531 of the first sub protection member 530 and a plurality of second openings 5411 formed on the second plate part 541 of the second sub protection member 540 of FIG. 8B may be included. In an embodiment, the plurality of first openings 5311 and the plurality of second openings 5411 may be omitted, or may be replaced by recesses.

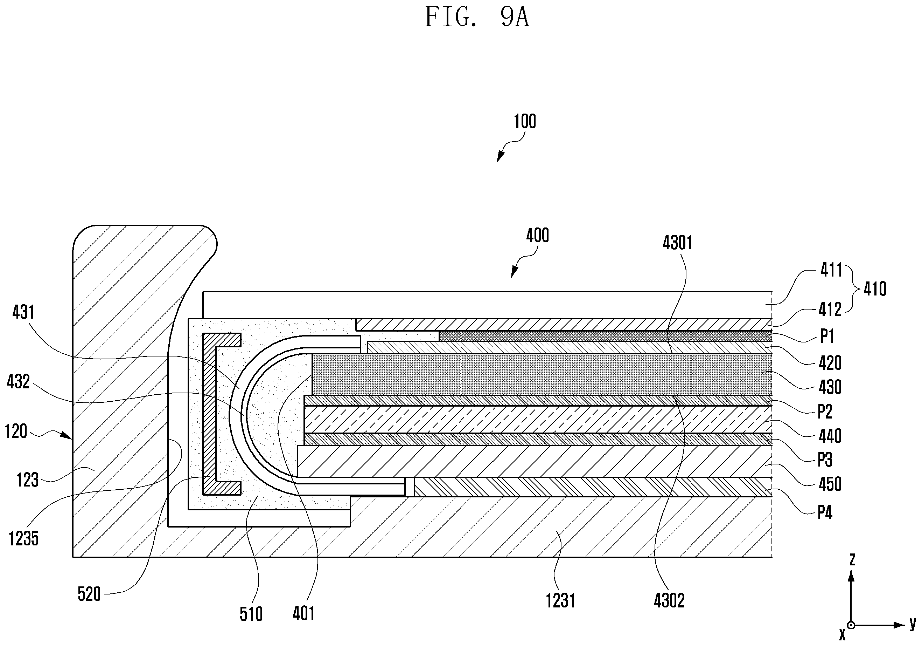

FIGS. 9A to 9J are partial cross-sectional views of an electronic device according to various embodiments of the disclosure.

In describing the electronic device 100 of FIGS. 9A to 9J, the same reference numerals are used for the constituent elements substantially the same as those of the electronic device 100 of FIG. 5A, and the detailed description thereof may be omitted.

With reference to FIG. 9A, the electronic device 100 may include a buffer part 510 disposed in a manner of embedding the bending part 432 at the first edge 401 of the flexible display 400, and a protection member 520 located inside the buffer part 510. In an embodiment, the first layer 411 of the window layer 410 may be disposed so that the edge is expanded up to the location where the edge overlaps at least the bending part 432 when the flexible display 400 is viewed from above. In an embodiment, the first layer 411 of the window layer 410 may be disposed so that the edge is expanded up to the location where the edge overlaps the protection member 520 when the flexible display 400 is viewed from above. In an embodiment, the first layer 411 of the window layer 410 may be disposed so that the edge is expanded up to the location where the edge overlaps at least the buffer part 510 when the flexible display 400 is viewed from above. Through such an expansion structure, the flexible display 400 can be supported by the buffer part 510 at the location that is closer to the second lateral member 123, and can reduce a gap between the second lateral member 123 and the edge of the flexible display 400 to help to form a clean appearance of the electronic device 100, thereby minimizing a risk of injury at sharp edges, and to reduce inflow of foreign substances thereto.

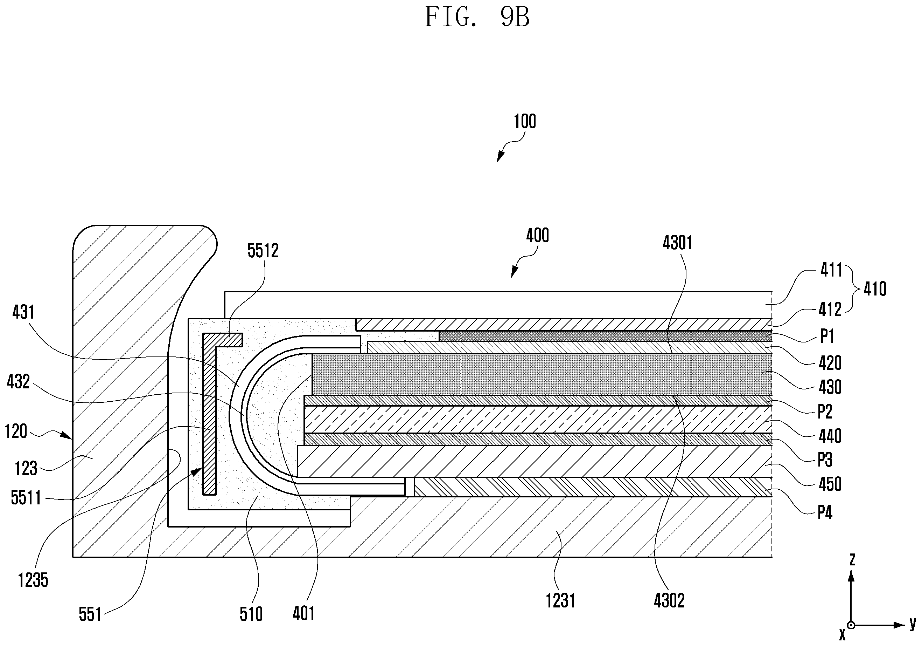

With reference to FIG. 9B, the electronic device 100 may include a buffer part 510 disposed in a manner of embedding the bending part 432 at the first edge 401 of the flexible display 400, and a protection member 551disposed inside the buffer part 510. In an embodiment, the protection member 551 may include a plate part 5511 and one extension part 5512 bent from an upper end of the plate part 5511 toward a direction of the bending part 432 (e.g., y-axis direction). In an embodiment, since the extension part 5512 is disposed near the bending part 432 at the location close to the window layer 410, it may help to improve durability of the flexible display 400 against an external impact in direction of an upward side (display side).

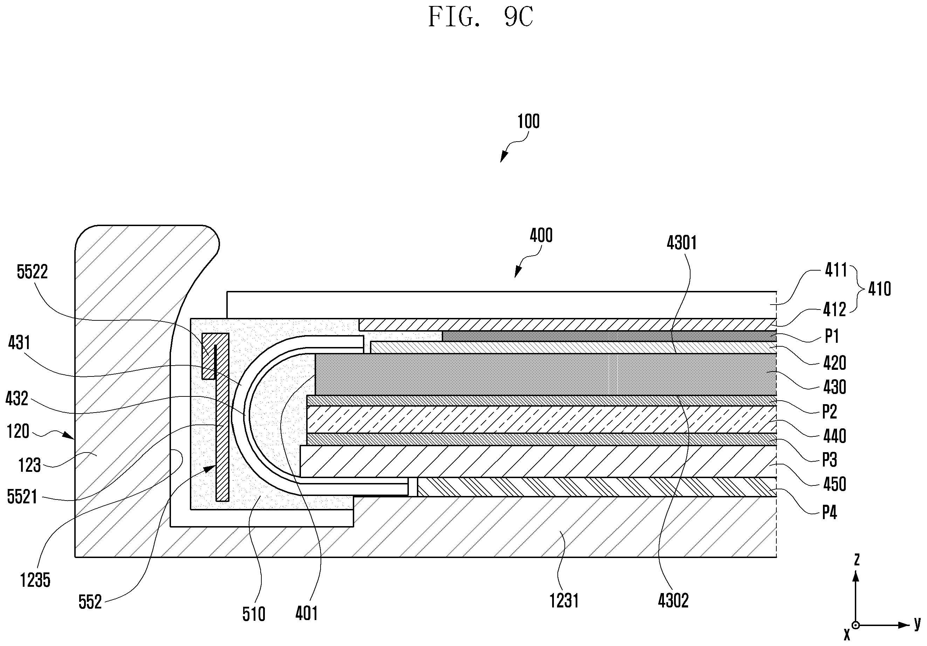

With reference to FIG. 9C, the electronic device 100 may include a buffer part 510 disposed in a manner of embedding the bending part 432 at the first edge 401 of the flexible display 400, and a protection member 552 disposed inside the buffer part 510. In an embodiment, the protection member 552 may include a plate part 5521 and an extension part 5522 disposed in a manner of coming in contact with the plate part 5521 after being bent from the upper end of the plate part 5521 toward an opposite direction to the direction of the bending part 432 (e.g., -y-axis direction). In an embodiment, since the upper part of the protection member 552 formed thickly through the extension part 5522 is disposed near the bending part 432 at the location close to the window layer 410, it may help to improve the durability of the flexible display 400 against an external impact in direction of a lateral side.

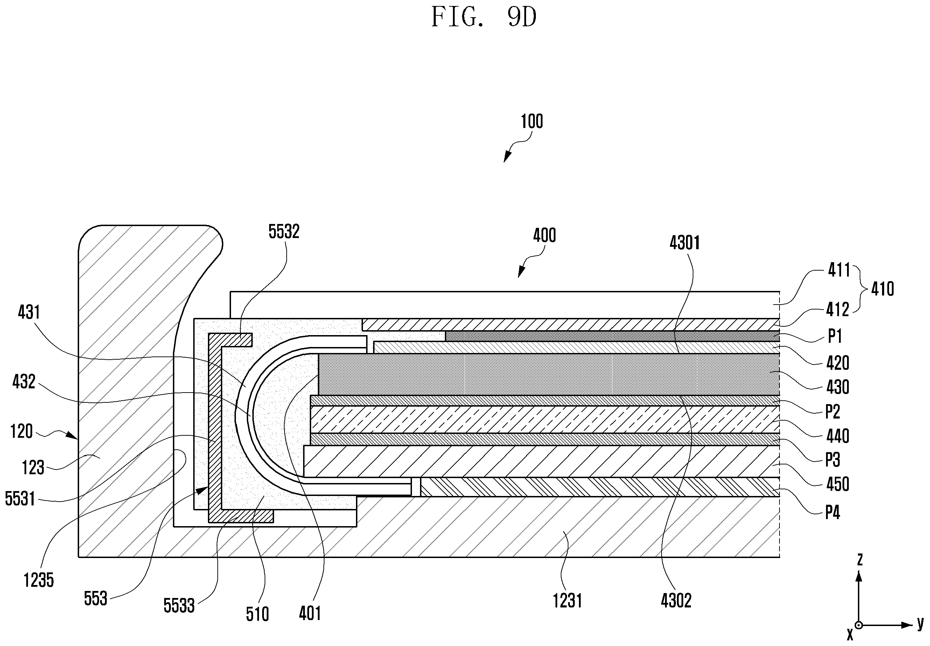

With reference to FIG. 9D, the electronic device 100 may include a buffer part 510 disposed in a manner of embedding the bending part 432 at the first edge 401 of the flexible display 400, and a protection member 553 disposed inside the buffer part 510 at least partly. In an embodiment, the protection member 553 may include a plate part 5531, a first extension part 5532 extending from an upper end of the plate part 5531 toward a direction of the bending part 432 (e.g., y-axis direction), and a second extension part 5533 extending from a lower end of the plate part 5531 toward the direction of the bending part 432 (e.g., y-axis direction). In an embodiment, the plate part 5531 and the first extension part 5532 may be embedded in the buffer part 510, and the second extension part 5533 may be exposed out of the buffer part 510. In this case, since the second extension part 5533 exposed to the outside is disposed to be supported by the second support member 1231, it may further help to improve the support structure of the flexible display 400 in direction of a backward side (rear side).

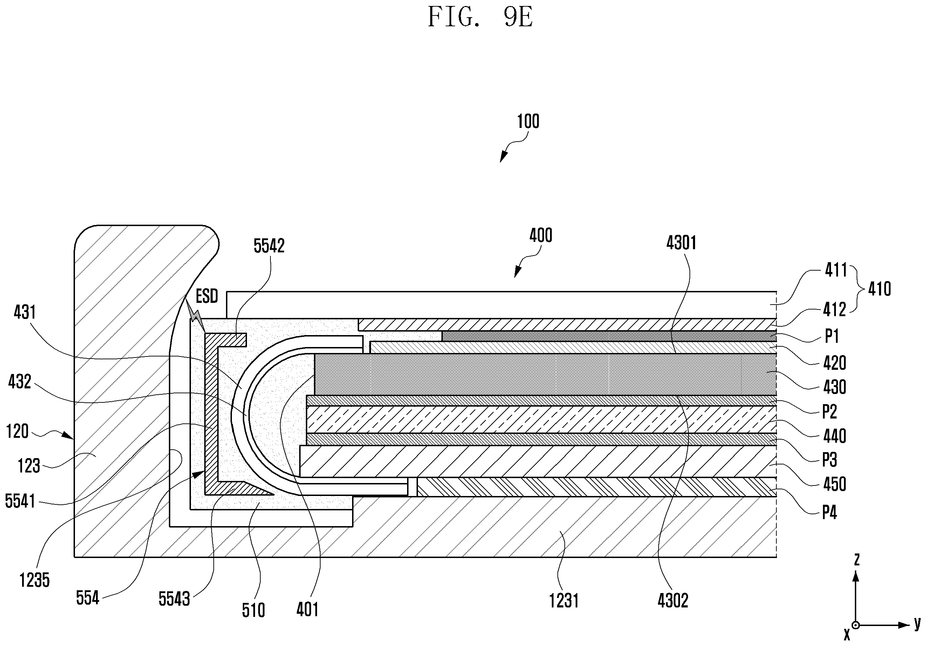

With reference to FIG. 9E, the electronic device 100 may include a buffer part 510 disposed in a manner of embedding the bending part 432 at the first edge 401 of the flexible display 400, and a protection member 554 disposed inside the buffer part 510. In an embodiment, the protection member 554 may include a plate part 5541, a first extension part 5542 extending from an upper end of the plate part 5541 toward a direction of the bending part 432 (e.g., y-axis direction), and a second extension part 5543 extending from a lower end of the plate part 5541 toward the direction of the bending part 432 (e.g., y-axis direction). In an embodiment, an end part of the second extension part 5543 may have a sharp lighting rod structure. Through the lighting rod structure described above, since the protection member 554 may have an electrostatic induction structure for applying static electricity introduced from the outside of the electronic device 100 to the conductive second support member 1231 and/or the ground of a surrounding structure (e.g., board) through the second extension part 5543, it may help to reduce a malfunction that may occur due to the introduction of the static electricity into the flexible display 400. In a certain embodiment, the second extension part 5543 may be disposed to come close to or to come in contact with a surrounding conductive structure (e.g., conductive support member or board). Hence, electrostatic discharge may be further prevented, also when occurring in a direction of a backward side (rear side).

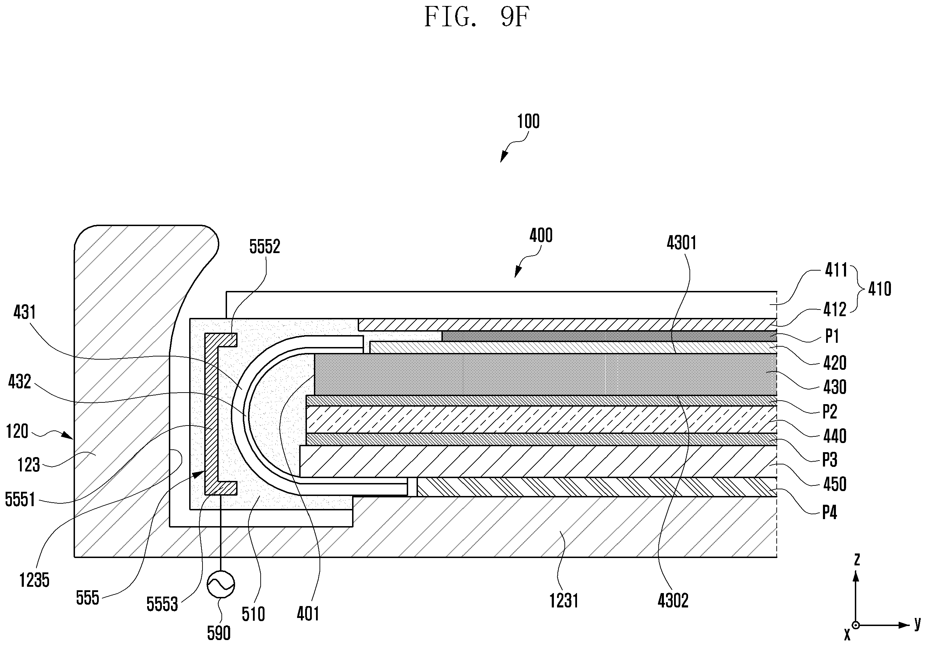

With reference to FIG. 9F, the electronic device 100 may include a buffer part 510 disposed in a manner of embedding the bending part 432 at the first edge 401 of the flexible display 400, and a protection member 555 disposed inside the buffer part 510. In an embodiment, the protection member 555 may include a plate part 5551, a first extension part 5552 extending from an upper end of the plate part 5551 toward a direction of the bending part 432 (e.g., y-axis direction), and a second extension part 5553 extending from a lower end of the plate part 5551 toward the direction of the bending part 432 (e.g., y-axis direction). In an embodiment, in case that the protection member 555 is formed of a metal material, it may be utilized as a radiator for an antenna. For example, since at least a part of the protection member 555 is electrically connected to a wireless communication circuit 590 (e.g., transceiver) disposed in an inner space (e.g., inner space of the first housing 110 and/or the second housing 120) of the electronic device 100, it may be used as an antenna configured to transmit or receive a wireless signal in at least one designated frequency band.

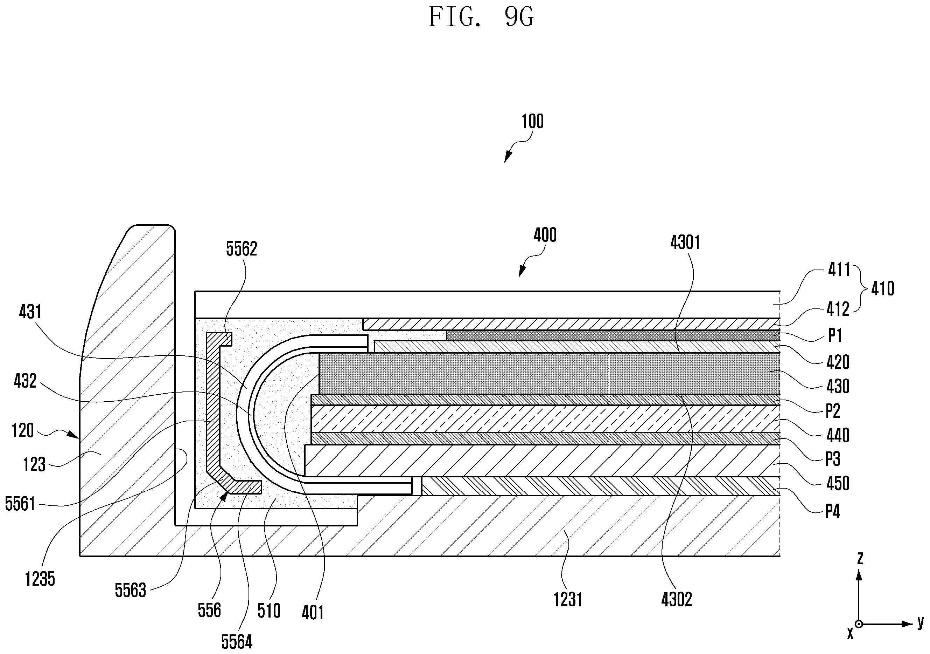

With reference to FIG. 9G, the electronic device 100 may include a buffer part 510 disposed in a manner of embedding the bending part 432 at the first edge 401 of the flexible display 400, and a protection member 556 disposed inside the buffer part 510 at least partly. In an embodiment, the flexible display 400 may be disposed not to overlap the second lateral member 123 when the flexible display 400 is viewed from above.

According to various embodiments, the protection member 556 may include a plate part 5561, a first extension part 5562 extending from an upper end of the plate part 5561 toward a direction of the bending part 432 (e.g., y-axis direction), a second extension part 5563 extending from a lower end of the plate part 5561 toward the direction of the bending part 432 with a designated angle, and a third extension part 5564 extending from a lower end of the second extension part 5563 toward the direction of the bending part 432 (e.g., y-axis direction). In an embodiment, the first layer 411 of the window layer 410 may be disposed to overlap the buffer part 510 when the flexible display 400 is viewed from above. Accordingly, the bending part 432 and the protection member 556 may also overlap the first layer 411 of the window layer 410. In an embodiment, through such an expansion structure, the flexible display 400 can be supported by the buffer part 510 at the location that is closer to the second lateral member 123, and can reduce a gap between the second lateral member 123 and the edge of the flexible display 400 to help to form a clear appearance of the electronic device 100 and to reduce inflow of foreign substances thereto. The arrangement of the flexible display 400 with regard to the second housing 120 further provides an improved visibility at the edge portion of the window layer 410.

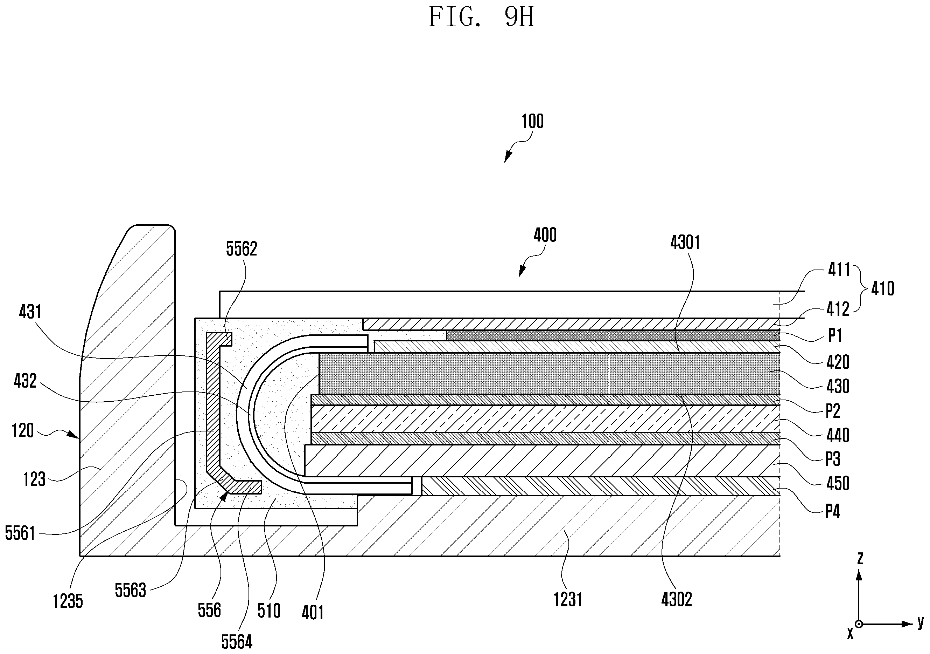

With reference to FIG. 9H, in the constitution of the electronic device 100 of FIG. 9G, the first layer 411 of the window layer 410 may be disposed to overlap a part of the buffer part 510 when the flexible display 400 is viewed from above. In this case, the first layer 411 of the window layer 410 may be disposed to overlap a part (e.g., first extension part 5562) of the protection member 556 when the flexible display 400 is viewed from above.

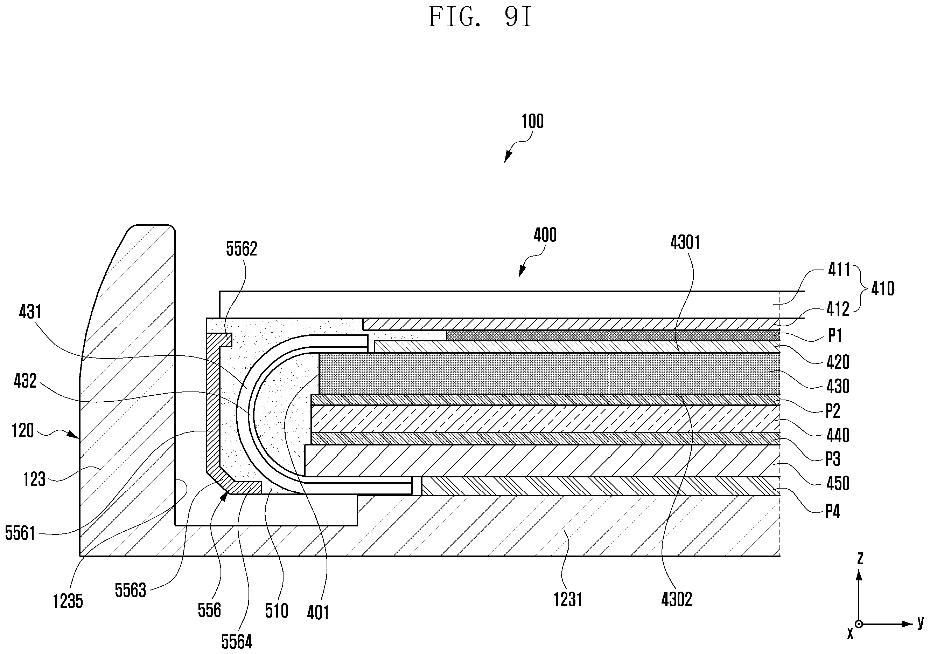

With reference to FIG. 9I, in the constitution of the electronic device 100 of FIG. 9G, the protection member 556 may be disposed to be partly exposed outside the buffer part 510. For example, as for the protection member 556, a part of the plate part 5561, a part of the second extension part 5563, and a part of the third extension part 5564 may be exposed outside the buffer part 510. In an embodiment, the first layer 411 of the window layer 410 may be disposed to overlap a part of the buffer part 510 when the flexible display 400 is viewed from above. In this case, the first layer 411 of the window layer 410 may be disposed to overlap a part (e.g., first extension part 5562) of the protection member 556 when the flexible display 400 is viewed from above.

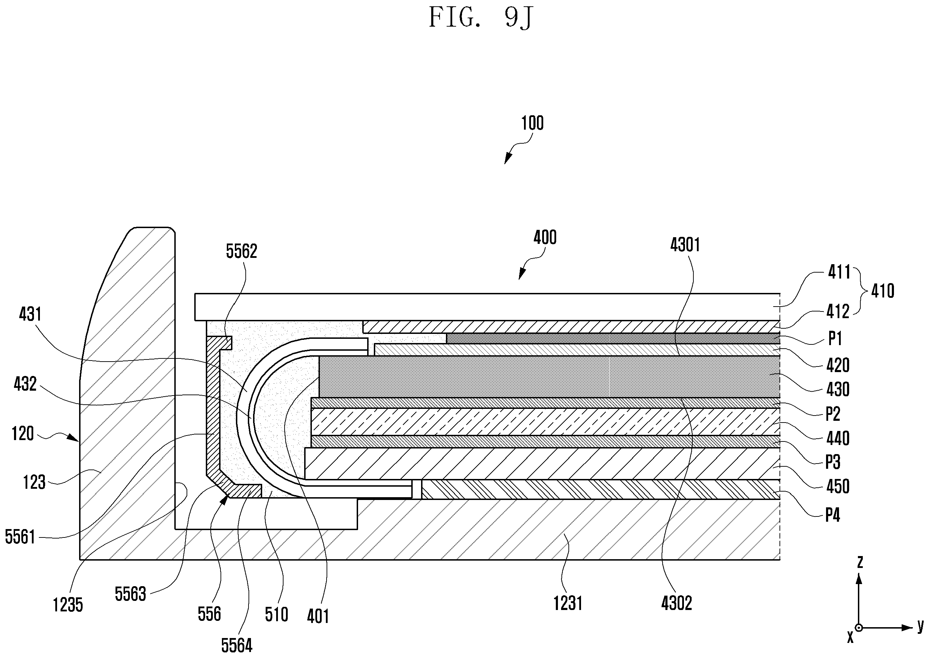

With reference to FIG. 9J, in the constitution of the electronic device 100 of FIG. 9I, the first layer 411 of the window layer 410 may be disposed to overlap the buffer part 510 when the flexible display 400 is viewed from above. In this case, the first layer 411 of the window layer 410 may be disposed to overlap the protection member 556, or to have an extended size in a direction (e.g., -y-axis direction) of the second lateral member 123 rather than the protection member 556.

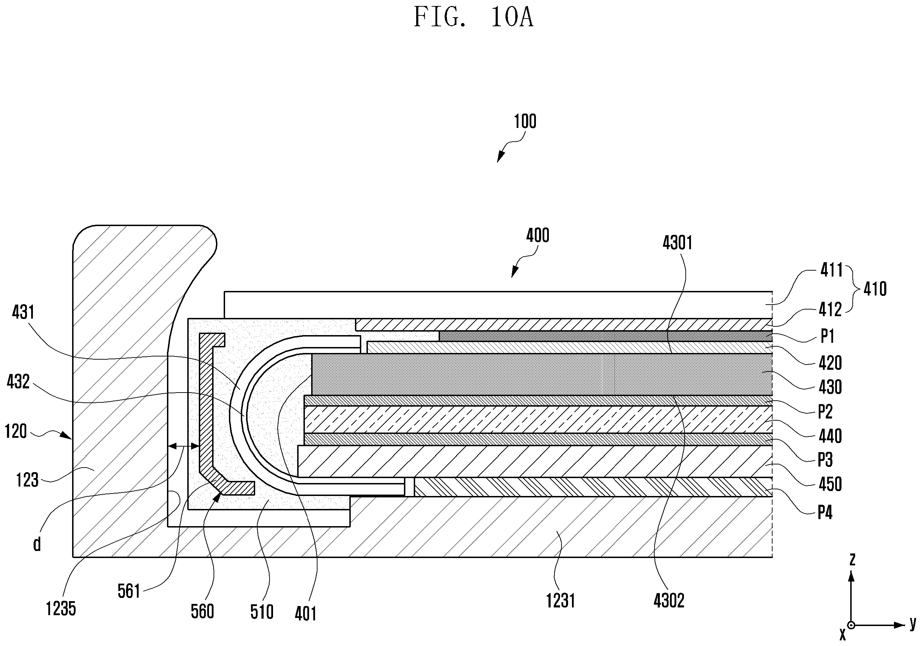

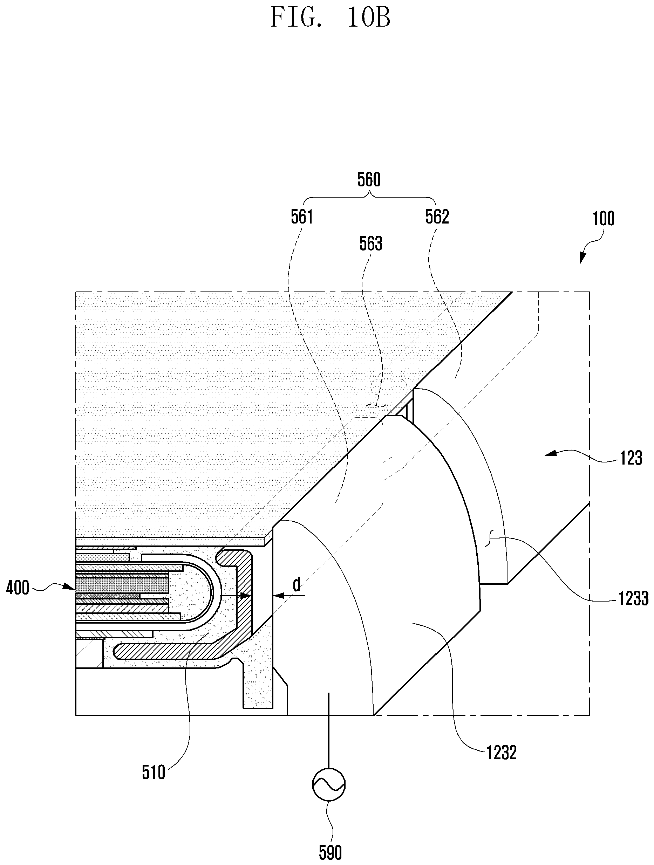

FIG. 10A is a partial cross-sectional view of an electronic device including a protection member according to various embodiments of the disclosure. FIG. 10B is a partial view of an electronic device illustrating a state where a protection member according to various embodiments of the disclosure is used as a dummy pattern of an antenna.

In describing the electronic device 100 of FIG. 10A, the same reference numerals are used for the constituent elements substantially the same as those of the electronic device 100 of FIG. 5A, and the detailed description thereof may be omitted.

With reference to FIGS. 10A and 10B, the electronic device 100 may include a conductive member 1232 in which at least a part of the second lateral member 123 is segmented through a segment part 1233. In an embodiment, since the conductive member 1232 is electrically connected to the wireless communication circuit 590 (e.g., transceiver) disposed in the inner space (e.g., inner space of the first housing 110 and/or the second housing 120) of the electronic device 100, it may be configured to transmit or receive the wireless signal in at least one designated frequency band.

According to various embodiments, the electronic device 100 may include a buffer part 510 disposed in a manner of embedding the bending part 432 at the first edge 401 of the flexible display 400, and at least one protection member 560 embedded inside the buffer part 510. In an embodiment, the at least one protection member 560 may include a first protection member 561 and a second protection member 562 disposed to be spaced apart from each other at designated intervals. In an embodiment, in case that the first protection member 561 is formed of a metal, it may be used as a dummy conductor (e.g., parasitic pattern or dummy pattern) of the surrounding conductive member 1232 that is used as the antenna. In this case, the first protection member 561 may be disposed to have a capacitively coupled distance d from the conductive member 1232. Accordingly, the first protection member 561 may help radiation performance improvement (e.g., bandwidth expansion) of the antenna that operates through the conductive member 1232. In a certain embodiment, the antenna may be disposed on an antenna carrier or board in the inner space of the electronic device 100, and may also include a laser direct structuring (LDS) pattern disposed at a location that is capacitively coupled to the first protection member 561.

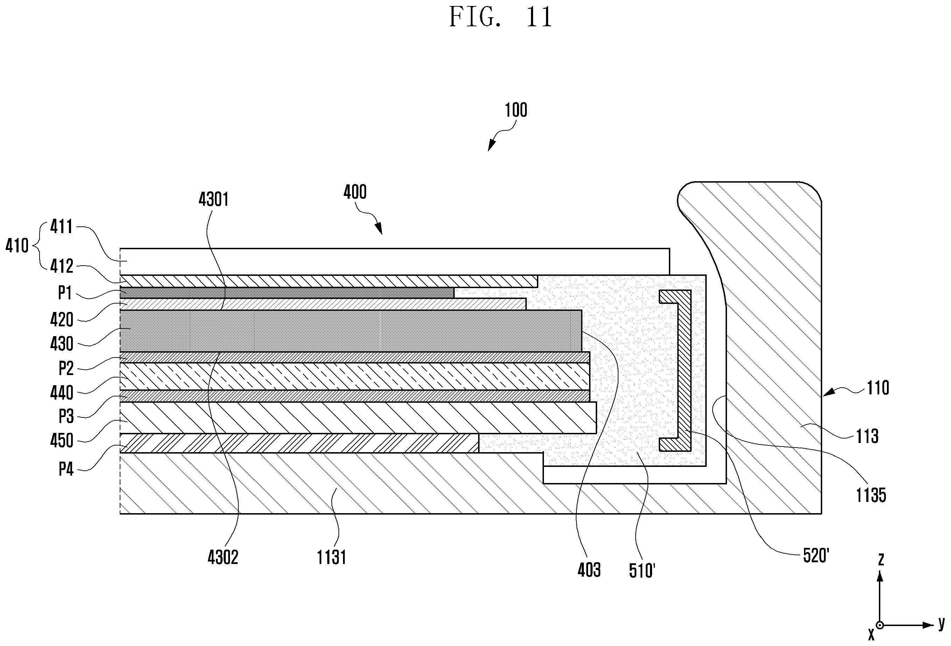

FIG. 11 is a partial cross-sectional view of an electronic device when viewed along line 11-11 of FIG. 1A according to various embodiments of the disclosure.

In describing the electronic device 100 of FIG. 11, the same reference numerals are used for the constituent elements substantially the same as those of the electronic device 100 of FIG. 5A, and the detailed description thereof may be omitted.

With reference to FIG. 11, the flexible display 400 may be disposed so that at least a part of the flexible display 400 is supported by a first lateral member 113 and a first support member 1131 extending from the first lateral member 123 to the inner space in the first housing 110. In an embodiment, the flexible display 400 may include a plane part disposed on at least a part of the first housing 110 and disposed to be supported by the at least a part of the first housing 110. In an embodiment, a third edge 403 (e.g., third edge area) of the flexible display 400 may be disposed until near a side wall 1135 (e.g., side wall of the first housing 110 or inner side wall of the first housing 110) corresponding to the first side surface (e.g., first side surface (e.g., first side surface 113a of FIG. 1A) of the first housing 110.

According to various embodiments, an electronic device 100 may include a buffer part 510' (e.g., filling member, soft molding, or molding part) disposed to cover at least a part of the third edge 403 of the flexible display 400. In an embodiment, the buffer part 510' may be formed to have physical properties substantially the same as or different from those of the buffer part 510 of FIG. 5A. In an embodiment, the buffer part 510' may be formed in a manner that the molding liquid is cured. According to an embodiment, the cured molding liquid may have a designated molding modulus value, and may be disposed to protect the third edge 403 of the flexible display 400. For example, the molding modulus value of the buffer part 510' is equal to or smaller than about 10 MPa, and thus may accommodate an interlayer slip phenomenon of the flexible display 400 occurring during folding, and help the surface quality improvement of the flexible display 400. In a certain embodiment, the buffer part 510 or 510' may include a material which is additionally applied or attached to the edge areas 401, 402, 403, and 404 of the flexible display 400, and has a proper elastic force.

According to various embodiments, the electronic device 100 may include a protection member 520' embedded in the buffer part 510' at least partly between the flexible display 400 and the side wall 1135 of the first housing 110. In an embodiment, since the protection member 520' is disposed in a manner of surrounding or covering at least a part of the third edge 403 at a location spaced apart from the third edge 403, and is formed of a rigid material, it may help the durability improvement of the flexible display 400 against external impact. In an embodiment, the protection member 520' may be formed to have rigidity substantially the same as or different from that of the protection member 520 of FIG. 5A.

The disposition constitution of the buffer part 510' and the protection member 520' embedded at least partly in the buffer part 510' may be substantially equally applied even to the second edge (e.g., second edge 402 of FIG. 4B) (e.g., second edge area) of the flexible display 400 corresponding to the second side surface (e.g., second side surface 113b of FIG. 1A) of the first housing 110 and the fifth side surface (e.g., fifth side surface 123b of FIG. 1A) of the second housing (e.g., second housing 120 of FIG. 1A), and to the fourth edge (e.g., fourth edge 404 of FIG. 4B) (e.g., fourth edge area) of the flexible display 400 corresponding to the third side surface (e.g., third side surface 113c of FIG. 1A) of the first housing 110 and the sixth side surface (e.g., sixth side surface 123c of FIG. 1A) of the second housing (e.g., second housing 120 of FIG. 1A).

In a certain embodiment, since the buffer part 510 and/or the protection member 520 configured to cover the bending part (e.g., bending part 432 of FIG. 5A) disposed at the fourth edge 404 of the flexible display 400 are formed to have a relatively higher rigidity than that of the buffer part 510' and/or the protection member 520' applied to at least one of the remaining first, second, and third edges 401, 402, and 403, they may help protection of the bending part (e.g., bending part 432 of FIG. 5A). For example, the protection member 520 configured to cover the bending part (e.g., bending part 432 of FIG. 5A) disposed at the fourth edge 404 of the flexible display 400 may be formed with a thickness relatively thicker than that of the protection member 520' applied to at least one of the remaining first, second, and third edges 401, 402, and 403, with a stronger material, or with a relatively small number of openings (e.g., openings 5211 of FIG. 8A). Further, since the static electricity flowing in through the flexible display 400 has a relatively high possibility of flowing in through the bending part (e.g., bending part 432 of FIG. 5A), a connection part of the protection member 520 disposed at a location corresponding to the bending part (e.g., bending part 432 of FIG. 5A) with a ground for discharging the static electricity may be constituted with a relatively larger size, or a larger number of connection parts may be constituted.

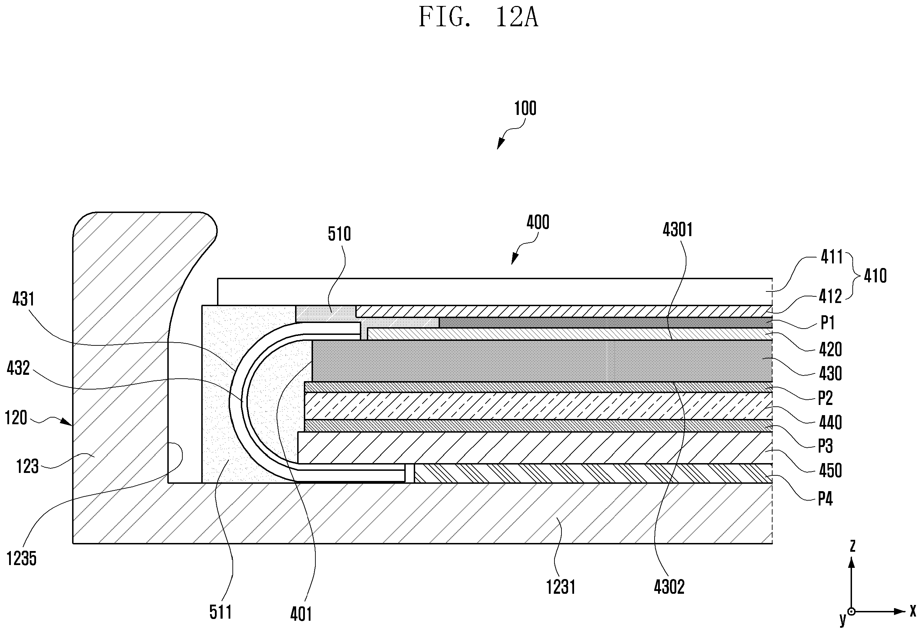

FIGS. 12A to 12C are cross-sectional views of an electronic device illustrating a support structure of a bending part using heterogeneous buffer parts according to various embodiments of the disclosure.

In describing the electronic device 100 of FIGS. 12A to 12C, the same reference numerals are used for the constituent elements substantially the same as those of the electronic device 100 of FIG. 5A, and the detailed description thereof may be omitted.

With reference to FIG. 12A, the flexible display 400 may be disposed so that at least a part of the flexible display 400 is supported by a second lateral member 123 and a second support member 1231 extending from the second lateral member 123 to the inner space in the second housing 120. In an embodiment, the flexible display 400 may include a plane part disposed on at least a part of the second housing 120 and disposed to be supported by the at least a part of the second housing 120. In an embodiment, a first edge 401 (e.g., first edge area) of the flexible display 400 may be disposed until near a side wall 1235 (e.g., side wall of the second housing 120 or inner side wall of the second housing 120) corresponding to the fourth side surface (e.g., fourth side surface 123a of FIG. 1A) of the second housing 120.

According to various embodiments, an electronic device 100 may include heterogeneous buffer parts 510 and 511 disposed to cover at least a part of the first edge 401 of the flexible display 400. In an embodiment, the heterogeneous buffer parts 510 and 511 may protect the first edge 401 of the flexible display 400, and may include a first buffer part 510 (e.g., buffer part 510 of FIG. 5A) having physical properties for accommodating the interlayer slip phenomenon of the flexible display 400 occurring during folding, and a second buffer part 511 extending from the first buffer part 510, and having a relatively high rigidity to cover at least a part of the bending part 432. In an embodiment, the first buffer part 510 may include a soft molding part having the molding modulus value equal to or smaller than about 10 MPa. In an embodiment, the second buffer part 511 may include a soft molding part having the molding modulus value equal to or larger than about 100 MPa.

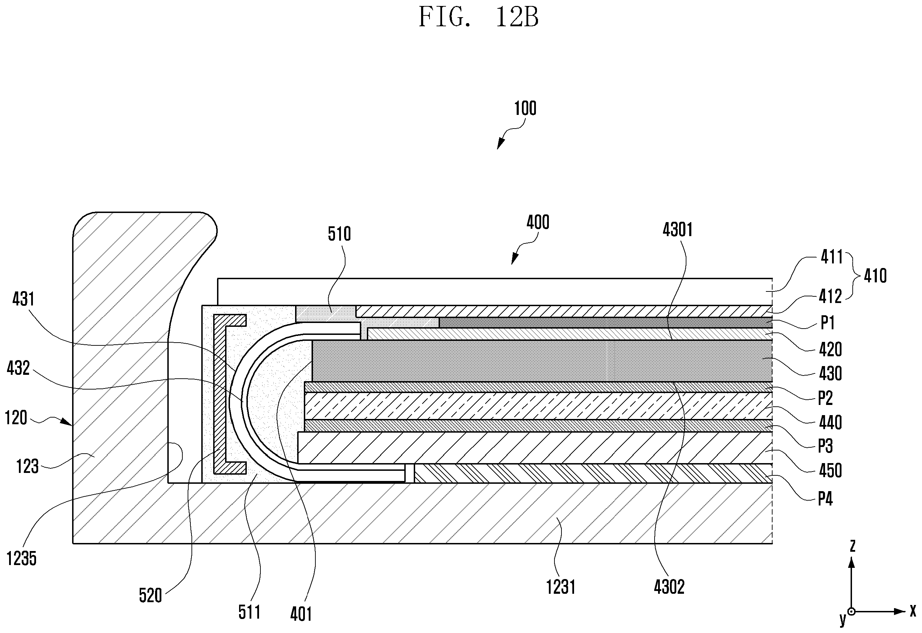

With reference to FIG. 12B, the electronic device 100 may include a protection member (e.g., protection member 520) embedded in the second buffer part 511 at least partly. In an embodiment, since the protection member 520 is disposed in a manner of surrounding or covering at least a part of the third edge 403 at a location spaced apart from the third edge 403 of the flexible display 400, and is formed of a rigid material, it may help the durability improvement of the flexible display 400 against external impact.

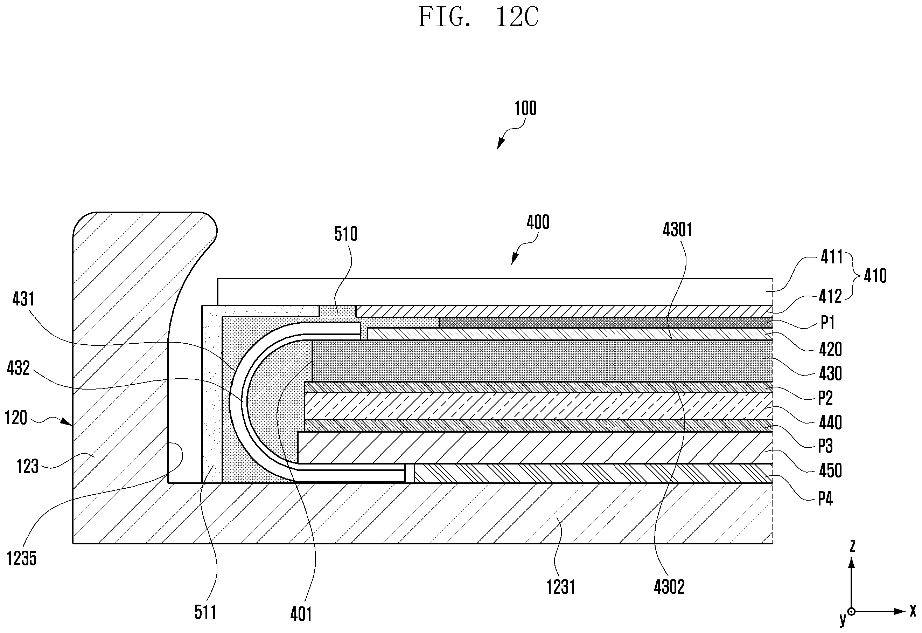

With reference to FIG. 12C, since the first buffer part 510 is disposed to cover the bending part 432, and the second buffer part 511 is disposed to surround the edge of the first buffer part 510 adjacent to the side wall 1235, it is possible to provide the rigidity capable of helping the durability improvement of the flexible display 400 against external impact.

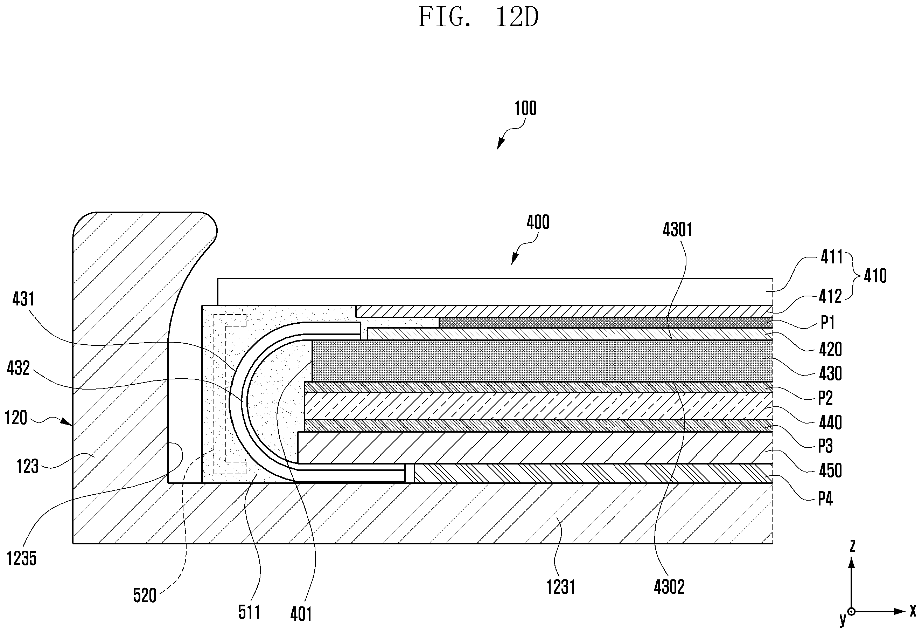

FIG. 12D is a cross-sectional view of an electronic device illustrating a support structure of a bending part through a second buffer part according to various embodiments of the disclosure.

With reference to FIG. 12D, the electronic device 100 may include only the second buffer part 511 disposed to cover at least a part of the first edge 401 and the bending part 432 of the flexible display 400. In a certain embodiment, the protection member 520 built in the second buffer part 511 between the side wall 1235 and the first edge 401 and configured to provide the rigidity to the flexible display 400 may be built in the electronic device 100.

According to various embodiments, the disposition structure of the heterogeneous buffer parts 510 and 511 and/or the protection member 520 for protecting the bending part 432 and the first edge 401 illustrated in at least one of FIGS. 12A to 12D may be substantially equally applied even to the third edge (e.g., third edge 403 of FIG. 4B) (e.g., third edge area) of the flexible display 400 corresponding to the first side surface (e.g., first side surface 113a of FIG. 1A) of the first housing (e.g., first housing 110 of FIG. 1A), to the second edge (e.g., second edge 402 of FIG. 4B) (e.g., second edge area) of the flexible display 400 corresponding to the fifth side surface (e.g., fifth side surface 123b of FIG. 1A) of the second housing (e.g., second housing 120 of FIG. 1A), and to the fourth edge (e.g., fourth edge 404 of FIG. 4B) (e.g., fourth edge area) of the flexible display 400 corresponding to the third side surface (e.g., third side surface 113c of FIG. 1A) of the first housing (e.g., first housing 120 of FIG. 1A) and the sixth side surface (e.g., sixth side surface 123c of FIG. 1A) of the second housing (e.g., second housing 120 of FIG. 1A).

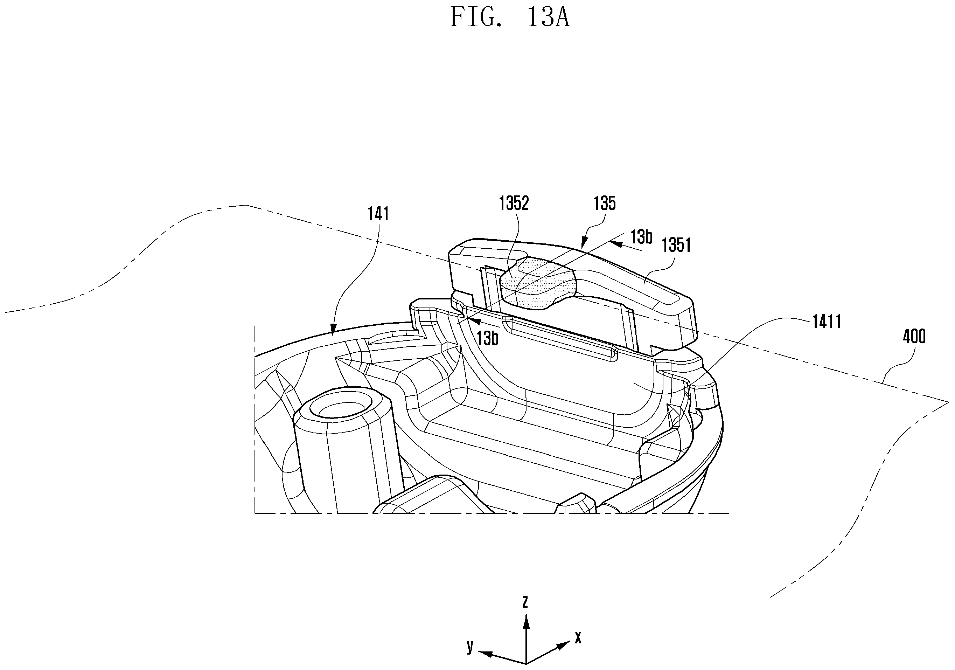

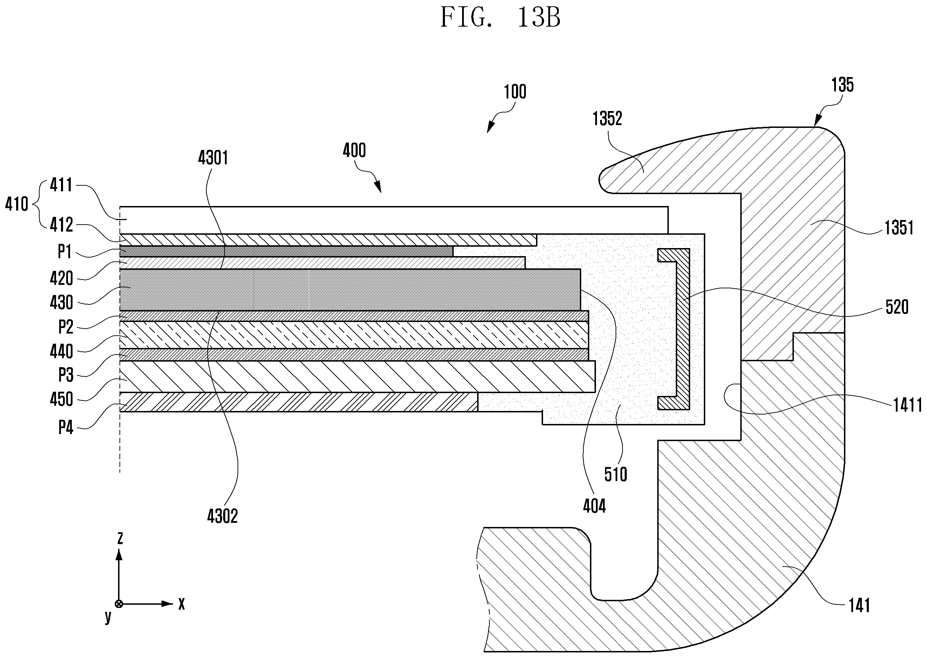

FIG. 13A is a view illustrating a support structure of a flexible display through a protection cap according to various embodiments of the disclosure. FIG. 13B is a partial cross-sectional view of an electronic device when viewed along line 13b-13b of FIG. 13A according to various embodiments of the disclosure.

In describing the electronic device 100 of FIGS. 13A and 13B, the same reference numerals are used for the constituent elements substantially the same as those of the electronic device 100 of FIG. 11, and the detailed description thereof may be omitted.

With reference to FIGS. 13A and 13B, the electronic device may include a protection cap (e.g., protection cap 135 of FIG. 3) disposed on the hinge housing 141 to protect at least a part of an edge area corresponding to the third area (e.g., third area 130c of FIG. 1A) (e.g., folding area) of the flexible display. In an embodiment, the protection cap 134 may include a fixed part 1351 fixed to the hinge housing 141, and a support part 1352 extending from the fixed part 1351, and located to at least partly overlap the edge area of the flexible display 400 when the flexible display 400 is viewed from above.

According to various embodiments, an electronic device 100 may include a buffer part 510 (e.g., filling member, soft molding, or molding part) disposed to cover at least a part of the fourth edge 404 of the flexible display 400. In an embodiment, the buffer part 510 may be formed to have physical properties substantially the same as or different from those of the buffer part 510 of FIG. 5A. In an embodiment, the buffer part 510 may be formed in a manner that the molding liquid is cured. In an embodiment, the cured molding liquid may have a designated molding modulus value, and may be disposed to protect the fourth edge 404 of the flexible display 400.

According to various embodiments, the electronic device 100 may include a protection member 520 embedded in the buffer part 510 at least partly between the flexible display 400 and the side wall 1411 of the hinge housing 141. In an embodiment, since the protection member 520 is disposed in a manner of surrounding or covering at least a part of the fourth edge 404 at a location spaced apart from the fourth edge 404, and is formed of a rigid material, it may help the durability improvement of the flexible display 400 against external impact. In an embodiment, the protection member 520 may be formed to have rigidity substantially the same as or different from that of the protection member 520 of FIG. 5A. In an embodiment, in the electronic device 100, the buffer part 510 and the protection member 520 may be disposed in substantially the same manner even between the protection cap 135 disposed on the hinge housing 141 and the second edge (e.g., second edge 402 of FIG. 4B) in the third area (e.g., third area 130c of FIG. 1A) (e.g., folding area) of the flexible display 400. In a certain embodiment, the hinge housing 141 and the protection cap 135 may be integrally formed.

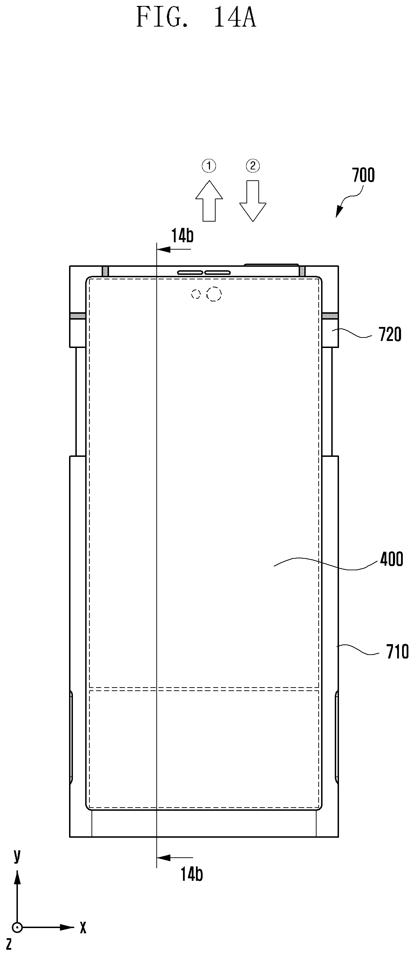

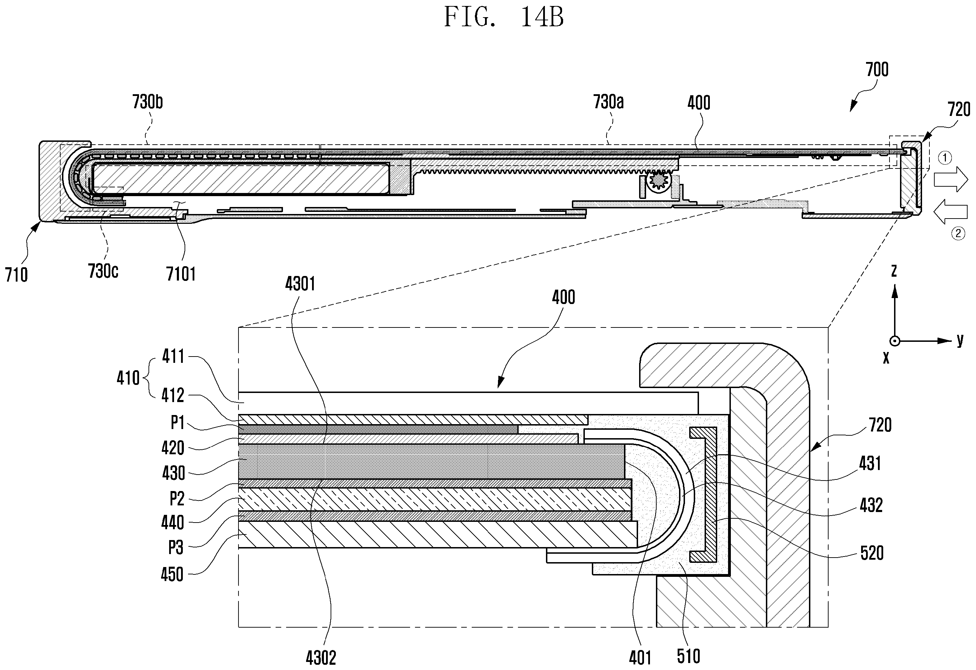

FIG. 14A is a constitutional view of a rollable electronic device according to various embodiments of the disclosure. FIG. 14B is a cross-sectional view of a rollable electronic device when viewed along line 14b-14b of FIG. 14 according to various embodiments of the disclosure.

In describing the flexible display 400 of FIGS. 14A and 14B, the same reference numerals are used for the constituent elements substantially the same as those of the flexible display 400 of FIG. 5A, and the detailed description thereof may be omitted.

With reference to FIGS. 14A and 14B, an electronic device 700 may include a first housing 710 and a second housing 720 slidably combined with the first housing 710 in a designated direction and in a designated reciprocating distance. In an embodiment, the electronic device 700 may include a flexible display 730 which is fixed to at least a part of the second housing 720, and of which the display area is varied through slide-in or slide-out into or from an inner space 7101 of the first housing 710 in accordance with a sliding operation of the second housing 720. For example, the flexible display 730 may have a first display area in a state where the second housing 720 slides out from the first housing 710 in a first direction (e.g., direction ①). In an embodiment, the flexible display 730 may have a second display area that is smaller than the first display area in a state where the second housing 720 slides in a second direction (e.g., direction ②) that is opposite to the first direction (e.g., direction ①).

According to various embodiments, the flexible display 730 may include a first plane area 730a fixed to the second housing, a bending area 730b extending from the first plane area 730a, exposed to be viewed from outside in a slide-out state, and sliding into the inner space 7101 of the first housing 710 through a bending operation in the slide-in state so as not to be viewed from the outside, and a second plane area 730c extending from the bending area 730b, configured not to be always exposed to the outside, and located in the inner space 7101 of the first housing 710. In an embodiment, the flexible display 400 may include a bending part 432 (e.g., COP or COF) extending from an end part (e.g., part that comes in sharp contact with or in contact with the second housing) of the first plane area 730a, and disposed in a bending manner on the rear surface of the flexible display 400.

According to various embodiments, the electronic device 100 may include a buffer part 510 (e.g., filling member, soft molding, or molding part) disposed to cover at least a part of the edge area 401 on the first plane area 730a of the flexible display 400. In an embodiment, the buffer part 510 may be formed to have physical properties substantially the same as or different from the buffer part 510 of FIG. 5A. In an embodiment, the buffer part 510 may be formed in a manner that the molding liquid is cured. In an embodiment, the cured molding liquid may have a designated molding modulus value, and may be disposed to protect the edge area 401 of the flexible display 400 in the slide-in/out operation.

According to the invention, the electronic device 100 includes a protection member 520 embedded in the buffer part 510 at least partly. In an embodiment, since the protection member 520 is disposed in a manner of surrounding or covering at least a part of the edge area 401, and is formed of a rigid material, it may help the durability improvement of the flexible display 400 against external impact.

According to the invention, an electronic device (electronic device 100 of FIG. 5A) includes a hinge module (e.g., hinge module 140 of FIG. 1B); a first housing (e.g., first housing 110 of FIG. 1A) connected to the hinge module; a second housing (e.g., second housing 120 of FIG. 1A) connected to the hinge module so as to be foldable against the first housing; and a flexible display (e.g., flexible display (e.g., flexible display 400 of FIG. 5A) disposed to be supported by the first housing and the second housing. The flexible display may include a window layer (e.g., window layer 410 of FIG. 5A); a display panel (e.g., display panel 430 of FIG. 5A) located under the window layer and including a plane part and a bending part (e.g., bending part 432 of FIG. 5A) extending from the plane part and being bent from the edge area of the flexible display adjacent to the side wall of the second housing toward the rear surface; a buffer part (e.g., buffer part 510 of FIG. 5A) disposed between the display panel and the second housing so as to cover at least a part of the edge area together with the bending part; and at least one protection member (e.g., protection member 520 of FIG. 5A) embedded in the buffer part at least partly and disposed between the bending part and the second housing. The bending part comprises at least a control circuit or a plurality of electronic elements.

According to various embodiments, at least a part of the window layer may at least overlap the bending part in the edge area when viewed in a direction vertical to the flexible display.

According to various embodiments, at least a part of the window layer may at least overlap the at least one protection member in the edge area when viewed in a direction vertical to the flexible display.

According to various embodiments, at least a part of the window layer may at least overlap the buffer part in the edge area when viewed in a direction vertical to the flexible display..

According to various embodiments, the at least one protection member may overlap the bending part when viewed in a direction vertical to the side wall of the second housing.

According to various embodiments, the at least one protection member may be spaced apart from the bending part at designated intervals.

According to various embodiments, the buffer part may have a molding modulus value equal to or smaller than 10 MPa.

According to various embodiments, the at least one protection member may include at least one of a metal, polycarbonate (PC), or fiber reinforced plastics (FRP).

According to various embodiments, the at least one protection member (e.g., protection member 520 of FIG. 5A) may include: a plate part (plate part 521 of FIG. 5B); a first extension part (e.g., first extension part 522 of FIG. 5B) extending from one end of the plate part in a direction of the bending part; and a second extension part (e.g., second extension part 523 of FIG. 5B) extending from the other end of the plate part in a direction in which the second extension part gets away from the side wall of the second housing.

According to various embodiments, on the plate part, a plurality of openings (a plurality of openings 5211 of FIG. 8A) may be formed at designated intervals.

According to various embodiments, at least a part of the at least one protection member (e.g., protection member 554 of FIG. 9E) may be electrically connected to the second housing or a ground accommodated in the second housing.

According to various embodiments, an external static electricity applied to the flexible display may be transferred to the second housing or the ground through the at least one protection member 554.

According to various embodiments, the at least one protection member may include at least two sub protection members (sub protection members 530 and 540 of FIG. 8B) spaced apart from each other at designated intervals in a direction parallel to the bending part.

According to various embodiments, a length (e.g., first length L1 of FIG. 7A) of the at least one protection member may be set to be equal to or longer than a length (e.g., second length L2 of FIG. 7A) of the bending part.

According to various embodiments, the electronic device may include a wireless communication circuit (e.g., wireless communication circuit 590 of FIG. 9F) disposed in an inner space of the first housing and/or the second housing, wherein the at least one protection member (e.g., protection member 555 of FIG. 9F) may include a conductive material electrically connected to the wireless communication circuit, and the wireless communication circuit may be configured to transmit or receive a wireless signal in at least one designated frequency band through the protection member.

According to various embodiments, the electronic device may include a conductive member (e.g., conductive member 1232 of FIG. 10B) electrically connected to the wireless communication circuit, and the conductive member may be spaced apart from at least a part of the protection member and may be electrically coupled thereto.

According to various embodiments, the conductive member (e.g., conductive member 1232 of FIG. 10B) may form at least a part of the side wall of the second housing.

According to various embodiments, the wireless communication circuit may be configured to transmit or receive a wireless signal in at least one designated frequency band through the conductive member and the protection member.

According to various embodiments, the first housing may include a first lateral member (e.g., first lateral member 113 of FIG. 1A) forming at least a part of a side surface of the electronic device and a first support member (e.g., first support member 1131 of FIG. 1A) extending from the first lateral member; the second housing may include a second lateral member (e.g., second lateral member 123 of FIG. 1A) forming at least a part of the side surface of the electronic device and a second support member (e.g., second support member 1231 of FIG. 1A) extending from the second lateral member; the flexible display may be disposed to be supported by the first support member and the second support member; and the buffer part may be disposed in a space formed through the second lateral member and the second support member.

According to various embodiments, an electronic device includes: a hinge module (e.g., hinge module 140 of FIG. 1A); a first housing (e.g., first housing 110 of FIG. 1A) connected to the hinge module; a second housing (e.g., second housing 120 of FIG. 1A) connected to the hinge module so as to be foldable against the first housing; and a flexible display (e.g., flexible display 400 of FIG. 1A) disposed to be supported by the first housing and the second housing, wherein the flexible display includes: a window layer (e.g., window layer 410 of FIG. 5A); a display panel (e.g., display panel 430 of FIG. 5A) located under the window layer: a buffer part (e.g., buffer part 510 of FIG. 5A) disposed between the display panel and the second housing to cover at least a part of the edge area of the display panel; and at least one protection member (e.g., protection member 520 of FIG. 5A) embedded in the buffer part and disposed between the display panel and the second housing.

According to various embodiments, at least a part of the at least one protection member (e.g., protection member 554 of FIG. 9E) may be electrically connected to the second housing or a ground accommodated in the second housing, and an external static electricity applied to the flexible display may be transferred to the second housing or the ground through the at least one protection member (e.g., protection member 554 of FIG. 9E).

Embodiments of the disclosure that are disclosed in the specification and drawings are to merely present specific examples for easy explanation of the technical contents according to the embodiments of the disclosure and to help understanding of the embodiments of the disclosure, but are not intended to limit the scope of the embodiments of the disclosure.

## Claims

1. An electronic device (100) comprising:
a hinge module (140);
a first housing (110) connected to the hinge module (140);
a second housing (120) connected to the hinge module (140) so as to be foldable against the first housing (110); and
a flexible display (400) disposed to be supported by the first housing (110) and the second housing (120),
wherein the flexible display (400) includes:
a window layer (410);
a display panel (430) located under the window layer (410), and including a plane part and a bending part (432) configured to extend from the plane part and be bent from an edge area (401, 402, 403, 404) of the flexible display (400) adjacent to a side wall of the second housing toward a rear surface of the flexible display (400), wherein the bending part (432) comprises at least a control circuit (4321a) or a plurality of electronic elements (4322a);
**characterized in that** the electronic device (100) further comprises:
a buffer part (510) disposed between the display panel (430) and the second housing (120) to cover at least a part of the edge area (401, 402, 403, 404) together with the bending part (432); and
at least one protection member (520, 554, 555) at least partly embedded in the buffer part (510) and disposed between the bending part (432) and the second housing (120).

2. The electronic device (100) of claim 1, wherein at least a part of the window layer (410) overlaps at least the bending part (432) in the edge area (401, 402, 403, 404) when viewed in a direction vertical to the flexible display (400).

3. The electronic device (100) of claim 1 or claim 2, wherein at least a part of the window layer (410) overlaps the at least one protection member (520, 554, 555) when viewed in a direction vertical to the flexible display (400).

4. The electronic device (100) of any one of claims 1 to 3, wherein at least a part of the window layer (410) overlaps at least the buffer part (510) in the edge area (401, 402, 403, 404) when viewed in a direction vertical to the flexible display (400).

5. The electronic device (100) of any one of claims 1 to 4,
wherein the at least one protection member (520, 554, 555) overlaps at least the bending part (432) when viewed in a direction vertical to the side wall of the second housing (120).

6. The electronic device (100) of any one of claims 1 to 5, wherein the at least one protection member (520, 554, 555) is spaced apart from the bending part (432) at designated intervals.

7. The electronic device (100) of any one of claims 1 to 6, wherein the buffer part (510) has a molding modulus value equal to or smaller than 10 MPa.

8. The electronic device (100) of any one of claims 1 to 7, wherein the at least one protection member (520, 554, 555) includes at least one of a metal, polycarbonate, PC, or fiber reinforced plastics, FRP.

9. The electronic device (100) of any one of claims 1 to 8, wherein the at least one protection member (520, 554, 555) includes:
a plate part (521);
a first extension part (522) extending from one end of the plate part (521) in a direction in which the first extension part (522) gets away from the side wall of the second housing (120); and a second extension part (523) extending from the other end of the plate part (521) in a direction in which the second extension part (523) gets away from the side wall of the second housing (120).

10. The electronic device (100) of claim 9, wherein on the plate part (521), a plurality of openings (5211) are formed at designated intervals.

11. The electronic device (100) of any one of claims 1 to 10, wherein the second housing includes a conductive material, and
at least a part of the at least one protection member (520, 554, 555) is electrically connected to the second housing (120).

12. The electronic device (100) of any one of claims 1 to 11, wherein an external static electricity applied to the flexible display (400) is transferred to the second housing (120) through the at least one protection member (554).

13. The electronic device (100) of any one of claims 1 to 12, wherein the at least one protection member (520, 554, 555) includes at least two sub protection members (530, 540) spaced apart from each other at designated intervals in a direction parallel to the bending part (432).

14. The electronic device (100) of any one of claims 1 to 13, wherein a first length (L1) of the at least one protection member (520, 554, 555) is set to be equal to or longer than a second length (L2) of the bending part (432).

15. The electronic device (100) of any one of claims 1 to 14, comprising a wireless communication circuit (590) disposed in an inner space of the first housing (110) and/or the second housing (120),
wherein the at least one protection member (520, 554, 555) includes a conductive material electrically connected to the wireless communication circuit, and
wherein the wireless communication circuit (590) is configured to transmit or receive a wireless signal in at least one designated frequency band through the protection member (520, 554, 555).

## Patentansprüche

1. Elektronische Vorrichtung (100), umfassend:
ein Scharniermodul (140);
ein erstes Gehäuse (110), das mit dem Scharniermodul (140) verbunden ist;
ein zweites Gehäuse (120), das mit dem Scharniermodul (140) so verbunden ist, dass es gegen das erste Gehäuse (110) faltbar ist; und
eine flexible Anzeige (400), die so angeordnet ist, dass sie vom ersten Gehäuse (110) und vom zweiten Gehäuse (120) gestützt wird;
wobei die flexible Anzeige (400) umfasst:
eine Fensterschicht (410);
eine Anzeigetafel (430), die sich unter der Fensterschicht (410) befindet und einen ebenen Teil und einen Biegeteil (432) umfasst, der so konfiguriert ist, dass er sich vom ebenen Teil aus erstreckt und von einem zu einer Seitenwand des zweiten Gehäuses benachbarten Randbereich (401, 402, 403, 404) der flexiblen Anzeige (400) in Richtung einer Rückfläche der flexiblen Anzeige (400) gebogen wird, wobei der Biegeteil (432) mindestens eine Steuerschaltung (4321a) oder eine Vielzahl von elektronischen Elementen (4322a) umfasst;
**dadurch gekennzeichnet, dass** die elektronische Vorrichtung (100) ferner umfasst:
einen Pufferteil (510), der zwischen der Anzeigetafel (430) und dem zweiten Gehäuse (120) angeordnet ist, um zumindest einen Teil des Randbereichs (401, 402, 403, 404) zusammen mit dem Biegeteil (432) abzudecken; und
mindestens ein Schutzelement (520, 554, 555), das zumindest teilweise in den Pufferteil (510) eingebettet und zwischen dem Biegeteil (432) und dem zweiten Gehäuse (120) angeordnet ist.

2. Elektronische Vorrichtung (100) nach Anspruch 1, wobei zumindest ein Teil der Fensterschicht (410) zumindest den Biegeteil (432) im Randbereich (401, 402, 403, 404) überlappt, wenn man sie in einer Richtung senkrecht zur flexiblen Anzeige (400) betrachtet.

3. Elektronische Vorrichtung (100) nach Anspruch 1 oder Anspruch 2, wobei mindestens ein Teil der Fensterschicht (410) das mindestens eine Schutzelement (520, 554, 555) überlappt, wenn man sie in einer Richtung senkrecht zur flexiblen Anzeige (400) betrachtet.

4. Elektronische Vorrichtung (100) nach einem der Ansprüche 1 bis 3, wobei mindestens ein Teil der Fensterschicht (410) mindestens den Pufferteil (510) im Randbereich (401, 402, 403, 404) überlappt, wenn man sie in einer Richtung senkrecht zur flexiblen Anzeige (400) betrachtet.

5. Elektronische Vorrichtung (100) nach einem der Ansprüche 1 bis 4,
wobei das mindestens eine Schutzelement (520, 554, 555) zumindest den Biegeteil (432) überlappt, wenn man es in einer Richtung senkrecht zur Seitenwand des zweiten Gehäuses (120) betrachtet.

6. Elektronische Vorrichtung (100) nach einem der Ansprüche 1 bis 5, wobei das mindestens eine Schutzelement (520, 554, 555) in bestimmten Abständen von dem Biegeteil (432) beabstandet ist.

7. Elektronische Vorrichtung (100) nach einem der Ansprüche 1 bis 6, wobei der Pufferteil (510) einen Formmodulwert gleich oder kleiner als 10 MPa aufweist.

8. Elektronische Vorrichtung (100) nach einem der Ansprüche 1 bis 7, wobei das mindestens eine Schutzelement (520, 554, 555) mindestens eines von einem Metall, einem Polycarbonat, PC oder einem faserverstärktem Kunststoff, FRP, enthält.

9. Elektronische Vorrichtung (100) nach einem der Ansprüche 1 bis 8, wobei das mindestens eine Schutzelement (520, 554, 555) umfasst:
einen Plattenteil (521);
einen ersten Verlängerungsteil (522), der sich von einem Ende des Plattenteils (521) in eine Richtung erstreckt, in der sich der erste Verlängerungsteil (522) von der Seitenwand des zweiten Gehäuses (120) entfernt; und
einen zweiten Verlängerungsteil (523), der sich vom anderen Ende des Plattenteils (521) in eine Richtung erstreckt, in der sich der zweite Verlängerungsteil (523) von der Seitenwand des zweiten Gehäuses (120) entfernt.

10. Elektronische Vorrichtung (100) nach Anspruch 9, wobei auf dem Plattenteil (521) eine Vielzahl von Öffnungen (5211) in bestimmten Abständen ausgebildet ist.

11. Elektronische Vorrichtung (100) nach einem der Ansprüche 1 bis 10, wobei das zweite Gehäuse ein leitfähiges Material enthält, und
mindestens ein Teil des mindestens einen Schutzelements (520, 554, 555) elektrisch mit dem zweiten Gehäuse (120) verbunden ist.

12. Elektronische Vorrichtung (100) nach einem der Ansprüche 1 bis 11, wobei eine externe statische Elektrizität, die an die flexible Anzeige (400) angelegt wird, durch das mindestens eine Schutzelement (554) auf das zweite Gehäuse (120) übertragen wird.

13. Elektronische Vorrichtung (100) nach einem der Ansprüche 1 bis 12, wobei das mindestens eine Schutzelement (520, 554, 555) mindestens zwei Unterschutzelemente (530, 540) umfasst, die in bestimmten Abständen in einer Richtung parallel zum Biegeteil (432) voneinander beabstandet sind.

14. Elektronische Vorrichtung (100) nach einem der Ansprüche 1 bis 13, wobei eine erste Länge (L1) des mindestens einen Schutzelements (520, 554, 555) so eingestellt ist, dass sie gleich oder länger als eine zweite Länge (L2) des Biegeteils (432) ist.

15. Elektronische Vorrichtung (100) nach einem der Ansprüche 1 bis 14, umfassend eine drahtlose Kommunikationsschaltung (590), die in einem Innenraum des ersten Gehäuses (110) und/oder des zweiten Gehäuses (120) angeordnet ist,
wobei das mindestens eine Schutzelement (520, 554, 555) ein leitfähiges Material enthält, das elektrisch mit der drahtlosen Kommunikationsschaltung verbunden ist, und
wobei die drahtlose Kommunikationsschaltung (590) konfiguriert ist, um ein drahtloses Signal in mindestens einem bestimmten Frequenzband über das Schutzelement (520, 554, 555) zu übertragen oder zu empfangen.

## Revendications

1. Dispositif électronique (100), comprenant :
un module de charnière (140) ;
un premier boîtier (110) relié au module de charnière (140) ;
un deuxième boîtier (120) relié au module de charnière (140) de manière à être pliable contre le premier boîtier (110) ; et
un affichage flexible (400) disposé pour être supporté par le premier boîtier (110) et le deuxième boîtier (120) ;
dans lequel l'affichage flexible (400) comprend :
une couche de fenêtre (410) ;
un panneau d'affichage (430) situé sous la couche de fenêtre (410), et comprenant une partie plane et une partie de pliage (432) configurée pour s'étendre à partir de la partie plane et être pliée à partir d'une zone de bord (401, 402, 403, 404) de l'affichage flexible (400) adjacente à une paroi latérale du deuxième boîtier vers une surface arrière de l'affichage flexible (400), dans lequel la partie de pliage (432) comprend au moins un circuit de commande (4321a) ou une pluralité d'éléments électroniques (4322a) ;
**caractérisé en ce que** le dispositif électronique (100) comprend en outre :
une partie de tampon (510) disposée entre le panneau d'affichage (430) et le deuxième boîtier (120) pour couvrir au moins une partie de la zone de bord (401, 402, 403, 404) avec la partie de pliage (432) ; et
au moins un élément de protection (520, 554, 555) au moins partiellement encastré dans la partie de tampon (510) et disposé entre la partie de pliage (432) et le deuxième boîtier (120).

2. Dispositif électronique (100) de la revendication 1, dans lequel au moins une partie de la couche de fenêtre (410) chevauche au moins la partie de pliage (432) dans la zone de bord (401, 402, 403, 404) lorsqu'elle est vue dans une direction verticale par rapport à l'affichage flexible (400).

3. Dispositif électronique (100) de la revendication 1 ou de la revendication 2, dans lequel au moins une partie de la couche de fenêtre (410) chevauche l'au moins un élément de protection (520, 554, 555) lorsqu'elle est vue dans une direction verticale par rapport à l'affichage flexible (400).

4. Dispositif électronique (100) de l'une quelconque des revendications 1 à 3, dans lequel au moins une partie de la couche de fenêtre (410) chevauche au moins la partie de tampon (510) dans la zone de bord (401, 402, 403, 404) lorsqu'elle est vue dans une direction verticale par rapport à l'affichage flexible (400).

5. Dispositif électronique (100) de l'une quelconque des revendications 1 à 4,
dans lequel l'au moins un élément de protection (520, 554, 555) chevauche au moins la partie de pliage (432) lorsqu'il est vu dans une direction verticale par rapport à la paroi latérale du deuxième boîtier (120).

6. Dispositif électronique (100) de l'une quelconque des revendications 1 à 5, dans lequel l'au moins un élément de protection (520, 554, 555) est espacé de la partie de pliage (432) à des intervalles désignés.

7. Dispositif électronique (100) de l'une quelconque des revendications 1 à 6, dans lequel la partie de tampon (510) présente une valeur de module de moulage égale ou inférieure à 10 MPa.

8. Dispositif électronique (100) de l'une quelconque des revendications 1 à 7, dans lequel l'au moins un élément de protection (520, 554, 555) comprend au moins un d'un métal, d'un polycarbonate, PC, ou d'un plastique renforcé de fibres, FRP.

9. Dispositif électronique (100) de l'une quelconque des revendications 1 à 8, dans lequel l'au moins un élément de protection (520, 554, 555) comprend :
une partie de plaque (521) ;
une première partie d'extension (522) s'étendant à partir d'une extrémité de la partie de plaque (521) dans une direction dans laquelle la première partie d'extension (522) s'éloigne de la paroi latérale du deuxième boîtier (120) ; et
une deuxième partie d'extension (523) s'étendant à partir de l'autre extrémité de la partie de plaque (521) dans une direction dans laquelle la deuxième partie d'extension (523) s'éloigne de la paroi latérale du deuxième boîtier (120).

10. Dispositif électronique (100) de la revendication 9, dans lequel sur la partie de plaque (521), une pluralité d'ouvertures (5211) sont formées à des intervalles désignés.

11. Dispositif électronique (100) de l'une quelconque des revendications 1 à 10, dans lequel le deuxième boîtier comprend un matériau conducteur, et
au moins une partie de l'au moins un élément de protection (520, 554, 555) est reliée électriquement au deuxième boîtier (120).

12. Dispositif électronique (100) de l'une quelconque des revendications 1 à 11, dans lequel une électricité statique externe appliquée à l'affichage flexible (400) est transférée au deuxième boîtier (120) à travers l'au moins un élément de protection (554).

13. Dispositif électronique (100) de l'une quelconque des revendications 1 à 12, dans lequel l'au moins un élément de protection (520, 554, 555) comprend au moins deux sous-éléments de protection (530, 540) espacés les uns des autres à des intervalles désignés dans une direction parallèle à la partie de pliage (432).

14. Dispositif électronique (100) de l'une quelconque des revendications 1 à 13, dans lequel une première longueur (L1) de l'au moins un élément de protection (520, 554, 555) est réglée pour être égale ou supérieure à une deuxième longueur (L2) de la partie de pliage (432)

15. Dispositif électronique (100) de l'une quelconque des revendications 1 à 14, comprenant un circuit de communication sans fil (590) disposé dans un espace intérieur du premier boîtier (110) et/ou du deuxième boîtier (120),
dans lequel l'au moins un élément de protection (520, 554, 555) comprend un matériau conducteur relié électriquement au circuit de communication sans fil, et
dans lequel le circuit de communication sans fil (590) est configuré pour transmettre ou recevoir un signal sans fil dans au moins une bande de fréquence désignée à travers l'élément de protection (520, 554, 555).
